# EUROPEAN PATENT SPECIFICATION

(11) **EP 2 855 354 B1**
(45) Date of publication and mention of the grant of the patent: **22.09.2021**
(21) Application number: 13800386.8
(22) Date of filing: 03.06.2013
(51) Int. Cl.: C01B 39/04, C01B 39/48, B01J 29/50, B01D 53/94, B01J 29/70, B01J 29/76, B01J 29/72, B01J 29/78, C01B 39/06, B01J 37/00, C10G 11/18

(54) **CHA TYPE ZEOLITIC MATERIALS AND METHODS FOR THEIR PREPARATION USING N,N,N-TRIMETHYLCYCLOHEXYLAMMONIUM COMPOUNDS**
ZEOLITHISCHE CHA-MATERIALIEN UND VERFAHREN ZU DEREN HERSTELLUNG UNTER VERWENDUNG VON N,N,N-TRIMETHYLCYCLOHEXYLAMMONIUMVERBINDUNGEN
MATÉRIAUX ZÉOLITHIQUES DE TYPE CHA ET LEURS PROCÉDÉS DE PRÉPARATION À L'AIDE DE COMPOSÉS DE N,N,N-TRIMETHYLCYCLOHEXYLAMMONIUM

(30) Priority: 04.06.2012 EP 12170709
(43) Date of publication of application: 08.04.2015
(73) Proprietor: BASF SE, 67056 Ludwigshafen am Rhein (DE)
(72) Inventor: FEYEN, Mathias, 69493 Hirschberg (DE); MÜLLER, Ulrich, 67435 Neustadt (DE); RUETZ, Roger, 68163 Mannheim (DE); BEIN, Thomas, 80539 München (DE); MÖLLER, Karin, 82166 Gräfelfing (DE)
(74) Representative: BASF IP Association
(86) International application number: PCT/IB2013/054569
(87) International publication number: WO 2013/182974

(56) References cited:
- EP-A2- 2 325 143
- CN-A- 1 646 427
- CN-A- 101 489 674
- CN-A- 102 099 293
- US-A1- 2007 100 185
- US-A1- 2008 045 767

## Description

### TECHNICAL FIELD

The present invention relates to a process for the preparation of a zeolitic material as well as to a zeolitic material having the CHA-type framework structure as such and as obtainable from the inventive process. Furthermore, the present invention relates to the use of the inventive zeolitic materials in specific applications.

### INTRODUCTION

Molecular sieves are classified by the Structure Commission of the International Zeolite Association according to the rules of the IUPAC Commission on Zeolite Nomenclature. According to this classification, framework-type zeolites and other crystalline microporous molecular sieves, for which a structure has been established, are assigned a three letter code and are described in the Atlas of Zeolite Framework Types, 5th edition, Elsevier, London, England (2001).

Among said zeolitic materials, Chabazite is a well studied example, wherein it is the classical representative of the class of zeolitic materials having a CHA framework structure. Besides aluminosilicates such as Chabazite, the class of zeolitic materials having a CHA framework structure comprises a large number of compounds further comprising phosphorous in the framework structure are known which are accordingly referred to as silicoaluminophosphates (SAPO). In addition to said compounds, further molecular sieves of the CHA structure type are known which contain aluminum and phosphorous in their framework, yet contain little or no silica, and are accordingly referred to as aluminophosphates (APO). Zeolitic materials belonging to the class of molecular sieves having the CHA-type framework structure are employed in a variety of applications, and in particular serve as heterogeneous catalysts in a wide range of reactions such as in methanol to olefin catalysis and selective catalytic reduction of nitrogen oxides NOₓ to name some two of the most important applications. Zeolitic materials of the CHA framework type are characterized by three-dimensional 8-membered-ring (8MR) pore/channel systems containing double-six-rings (D6R) and cages.

Zeolitic materials having a CHA-type framework structure and in particular Chabazite with incorporated copper ions (Cu-CHA) are widely used as heterogeneous catalyst for the selective catalytic reduction (SCR) of NOₓ fractions in automotive emissions. Based on the small pore openings and the alignment of the copper ions in the CHA cages, these catalyst systems have a unique thermal stability, which tolerates temperatures higher than 700°C in presence of H₂O.

For the industrial production of CHA, cost intensive 1-adamantyltriemethylammoniumhydroxid among other expensive organotemplates are typically employed as structure directing agent in the synthetic procedures for their preparation. US 4,544,538 for example relates to the production of SSZ-13 using 1N-alkyl-3-quinuclidinol, N,N,N-tetraalkyl-1-adamantammonium, or N,N,N-trialkyl-exo-aminonorbornane as the structure directing agent, the SSZ-13 zeolitic material having a CHA-type framework structure.

WO-A-2008/083048, on the other hand, concerns a method for the production of SSZ-13 using a specific N,N,N-trimethyl benzyl quaternary ammonium cation in the presence of seed crystals. Similarly, WO-A-2008/039742 relates to a method for the production of SSZ-13 wherein a mixture of N,N,N-trialkyl benzyl quaternary ammonium cations and N,N,N-tetramethyl-1-adamantammonium are employed as the organotemplate in an effort for increasing cost-effectiveness by attempting to reduce the amount of the cost-intensive N,N,N-tetramethyl-1-adamantammonium usually employed in the synthesis of SSZ-13.

WO-A-2008/033229, concerns a method for the production of microporous materials using dicycloalkylammonium compounds as organic templating agents.

US 4,610,854 discloses the use of trimethylcyclohexylammonium for the production of SSZ-15, which is a zeolitic material displaying a framework structure other than the CHA-type. US-A-2007/0043249, on the other hand, relates to the use of a group of tetraalkylammonium compounds including trimethylcyclohexylammonium as organotemplates for the production of zeolitic materials having the CHA framework structure, wherein said materials are however restricted to alumino- or silicoaluminophosphates necessarily containing P₂O₅ in their respective frameworks. US2007/100185 and US2008/045767 disclose the use of N,N,N-dimethylethylcyclohexylammonium, N,N,N-methyldiethylcyclohexylammonium, or N,N,N-tri-ethylcyclohexylammonium as a structure directing agent to make CHA materials.

Consequently, there remains a need for a cost-effective process for the production of zeolitic materials having the CHA-type framework structure. Furthermore, there is an ongoing need for improved zeolitic materials having the CHA-type framework structure, in particular with respect to the catalytic properties for use in a variety of application and in particular for use in the treatment of NOₓ in automotive exhaust gas a catalyst and/or catalyst support. This applies in particular in view of national legislation and environmental policy which require increasing effectiveness of environmental catalysts such as Cu-Chabazite and related zeolitic materials.

### DETAILED DESCRIPTION

It was therefore the object of the present invention to provide an improved CHA-type zeolitic material, as well as to provide an improved method for the production of such a catalyst, in particular in view of cost-effectiveness. Thus it has surprisingly been found that an improved CHA-type zeolite may be obtained by using specific cycloalkylammonium compounds as organotemplates in the self-organizing synthetic procedures typical of zeolite chemistry. Furthermore, it has quite unexpectedly been found that besides providing an improved zeolitic material according to the present invention, the use of the cycloalkylammonium compounds affords a highly improved process for the production of said zeolitic materials, in particular with respect to the considerable increase in cost-effectiveness which may be achieved in view of the facile synthesis of the organotemplate materials of the present invention starting from inexpensive precursor compounds. This is in contrast to the methods known in the art for the production of zeolitic materials having the CHA-type framework structure which employ expensive organotemplates necessitating elaborate procedures for the synthesis.

Therefore, the present invention relates to a process for the preparation of a zeolitic material having a CHA-type framework structure comprising YO₂ and X₂O₃, wherein said process comprises the steps of:
(1) providing a mixture comprising one or more sources for YO₂, one or more sources for X₂O₃, and one or more N,N,N-trimethyl-cyclohexylammonium compounds as structure directing agent;
(2) crystallizing the mixture obtained in step (1) for obtaining a zeolitic material having a CHA-type framework structure; wherein Y is Si and X is Al, wherein the mixture provided in step (1) comprises seed crystals, wherein the seed crystals comprise one or more zeolitic material having a CHA-type framework structure, and wherein the mixture provided in step (1) contains 5 wt.-% or less of P₂O₅ contained in a source for P₂O₅ based on 100 wt.-% of SiO₂ contained in the one or more sources for SiO₂.

Thus, it has surprisingly been found that by using a cycloalkylammonium cation according to the inventive process as structure directing agent, a highly cost-effective process is provided, wherein even more unexpectedly, said improved process actually leads to an improved zeolitic material having the CHA-type framework structure compared to materials obtained by using other organotemplates in their respective synthetic procedures. Thus, as compared to the cost-intensive organotemplate materials used in the prior art, the cycloalkylammonium organotemplate compounds may be obtained according to facile synthetic procedures departing from inexpensive materials. Trimethylcyclohexylammoniumhy-droxid is employed as the organotemplate compound, said structure directing agent may for example be obtained according to a facile procedure involving the alkylation of aniline, which results in much lower raw material and production costs than in the organic synthesis of for example 1-adamantyltriemethylammoniumhydroxid used in the prior art synthetic methodologies.

Furthermore, as mentioned in the foregoing, it has quite unexpectedly been found that the zeolitic materials having the CHA-type framework structure obtained from the inventive process displays improved characteristics which clearly contrast to those observed for the prior art CHA-type zeolitic materials. This is particularly apparent from the different physical and chemical properties obtained for the resulting materials which clearly distinguish them from those known from the prior art, as a result of which improved properties may be obtained such as for example in catalysis, and more particularly in environmental catalysis, which constitutes a highly important technical field in which CHA-type zeolitic materials are employed.

Within the meaning of the present invention, the term "substantial" with respect to the amount of a source for Z₂O₅ being contained in the mixture provided in step (1) and crystallized in step (2) according to preferred embodiments of the inventive process, this preferably indicates an amount of 1 wt.-% or less, more preferably of 0.5 wt.-% or less, more preferably of 0.1 wt.-% or less, more preferably of 0.05 wt.-% or less, more preferably of 0.01 wt.-% or less, more preferably of 0.005 wt.-% or less, more preferably of 0.001 wt.-% or less, more preferably of 0.0005 wt.-% or less, and even more preferably of 0.0001 wt.-% or less of Z₂O₅ contained in a source for Z₂O₅ based on 100 wt-% of YO₂ contained in the one or more sources for YO₂.

According to the invention process, one or more sources for YO₂ are provided in step (1), wherein said one or more sources may be provided in any conceivable form provided that a zeolitic material comprising YO₂ and X₂O₃ and having the CHA-type framework structure is crystallized in step (2). Preferably, YO₂ is provided as such and/or has a compound which comprises YO₂ as a chemical moiety and/or as a compound which (partly or entirely) is chemically transformed to YO₂ during the inventive process.

As regards YO₂ and/or precursors thereof employed in the inventive process, Y is Si and that it is comprised in the zeolitic material crystallized in step (2). In particular, within the meaning of the present invention, YO₂ is at least partially and preferably entirely comprised in the framework structure of the zeolitic material as structure building element, as opposed to non-framework elements which can be present in the pores and cavities formed by the framework structure and typical for zeolitic materials in general. According to the present invention, wherein Y stands for Si, the source for SiO₂ preferably provided in step (1) can also be any conceivable source. Thus, by way of example, any type of silicas and/or silicates and/or silica derivatives may be used, wherein preferably the one or more sources for YO₂ comprises one or more compounds selected from the group consisting of fumed silica, silica hydrosols, reactive amorphous solid silicas, silica gel, silicic acid, water glass, sodium metasilicate hydrate, sesquisilicate, disilicate, colloidal silica, pyrogenic silica, silicic acid esters, or mixtures of any two or more of the aforementioned compounds may equally be used. According to particularly preferred embodiments, the one or more sources for YO₂ used in step (1) of the inventive process are selected from the group consisting of fumed silica, silica hydrosols, reactive amorphous solid silicas, silica gel, silicic acid, colloidal silica, silicic acid esters, and mixtures of two or more thereof. According to said particularly preferred embodiments, it is further preferred that the one or more sources for YO₂ are selected from the group consisting of fumed silica, silica hydrosols, reactive amorphous solid silicas, silica gel, colloidal silica, and mixtures of two or more thereof, wherein even more preferably according to the inventive process, the one or more sources for YO₂ comprises fumed silica and/or colloidal silica.

As structure directing agent, the inventive process uses one or more N,N,N-trimethyl-cyclohexylammonium compounds, more preferably a single *N*,*N*,*N*-trimethyl-cyclohexylammonium compound. According to preferred embodiments, the one or more N,N,N-trimethyl-cyclohexylammonium compounds contain one or more salts. In principle, according to said preferred embodiments, there is no particular restriction as to the counter ion again provided that these allow for the crystallization of a zeolitic material having a CHA-type framework structure in step (2) of the inventive process by the structure directing action of one or more of the aforementioned N,N,N-trimethyl-cyclohexylammonium compounds. Thus, by way of example, the one or more N,N,N-trimethyl-cyclohexylammonium compounds may comprise one or more salts selected from halides, hydroxides, sulfates, nitrates, phosphates, acetates, and mixtures of two or more thereof. As regards the halide salts, these are preferably chloride and/or bromide salts, wherein even more preferably chloride salts are employed. According to preferred embodiments of the present invention, the one or more N,N,N-trimethyl-cyclohexylammonium compounds comprise one or more one of more salts selected from the group consisting of chlorides, hydroxides, sulfates, and mixtures of two or more thereof, wherein more preferably hydroxides and/or chlorides. According to particularly preferred embodiments, the one or more N,N,N-trimethyl-cyclohexylammonium compounds are provided as their hydroxide salts in step (1) of the inventive process. According to embodiments of the present invention which are even further preferred, the one or more N,N,N-trimethyl-cyclohexylammonium compounds comprise *N*,*N*,*N*-trimethyl-cyclohexylammonium hydroxide, wherein even more preferably the N,N,N-trimethyl-cyclohexylammonium compound provided in step (1) is *N*,*N*,*N*-trimethyl-cyclohexylammonium hydroxide.

As regards the amount in which the one or more N,N,N-trimethyl-cyclohexylammonium compounds which is provided in the mixture in step (1) of the inventive process, again there is no particular restriction in this respect provided that a zeolitic material having a CHA-type framewok structure may be crystallized in step (2) of the inventive process. Thus, by way of example, the molar ratio of the N,N,N-trimethyl-cyclohexylammonium cations: YO₂ provided in the mixture may range anywhere from 0.01 to 5, wherein preferably the molar ratio is comprised in the range of from 0.05 to 3, more preferably from 0.1 to 1.5, more preferably from 0.3 to 1, more preferably from 0.4 to 0.8, and even more preferably from 0.45 to 0.75. According to particularly preferred embodiments of the present invention, the molar ratio of the N,N,N-trimethyl-cyclohexylammonium cations: YO₂ provided in the mixture according to step (1) is comprised in the range of from 0.5 to 0.7.

According to the present invention the mixture in step (1) comprises one or more sources of Al₂O₃ and preferably said one or more sources comprises one or more compounds selected from aluminum, aluminum alkoxides, alumina, aluminates, aluminum salts, and mixtures of two or more thereof, wherein the aluminates are preferably one or more aluminate salts selected from the group consisting of alkali metal aluminates, aluminum hydroxide, and mixtures of two or more thereof, more preferably one or more aluminate salts selected from aluminum hydroxide, alkali metal aluminates, and mixtures of two or more thereof, the alkali metal preferably being sodium and/or potassium, and more preferably being sodium. It is preferred that said one or more sources comprise aluminum powder. Furthermore, according to embodiments wherein the one or more sources for Al₂O₃ comprise one or more aluminum alkoxides, there is no particular restriction as to the alkoxide substituents contained therein, provided that a zeolitic material may be crystallized in step (2) of the inventive process. Thus, by way of example, one or more aluminum alkoxides may be employed selected from the group consisting of (C₁-C₅)alkoxides, preferably (C₁-C₄)alkoxides, more preferably (C₂-C₃)alkoxides, and even more preferably branched C₃-alkoxides, wherein even more preferably the one or more sources for X₂O₃ comprises aluminum triisopropylate.

It is particularly preferred according to the present invention that the one or more sources for X₂O₃ comprises one or more compounds selected from the group consisting of alumina, aluminum salts, and mixtures of two or more thereof, more preferably from the group consisting of alumina, AIO(OH), Al(OH)₃, aluminum halides, preferably aluminum fluoride and/or chloride and/or bromide, more preferably aluminum fluoride and/or chloride, and even more preferably aluminum chloride, aluminum sulfate, aluminum phosphate, aluminum fluorosilicate, and mixtures of two or more thereof, more preferably from the group consisting of AIO(OH), Al(OH)₃, aluminum chloride, aluminum sulfate, aluminum phosphate, and mixtures of two or more thereof, more preferably from the group consisting of AIO(OH), Al(OH)₃, aluminum chloride, aluminum sulfate, and mixtures of two or more thereof. According to particularly preferred embodiments of the inventive process, the one or more sources for X₂O₃ comprises AIO(OH) and/or aluminum sulfate, and even more preferably aluminum sulfate.

No particular restriction applies according to the present invention neither regarding the type of the one or more sources for Al₂O₃ nor with respect to amounts in which they are used. Thus, by way of example, relative to the amount of the one or more sources for YO₂ provided in the mixture of step (1), the YO₂ : X₂O₃ molar ratio of the mixture may range anywhere from 0.5 to 500, wherein preferably molar ratios are provided comprised in the range of from 1 to 200, more preferably from 5 to 150, more preferably from 20 to 100, more preferably from 30 to 80, and even more preferably of from 40 to 60. According to particularly preferred embodiments, the YO₂ : X₂O₃ molar ratio of the mixture provided in step (1) is comprised in the range of from 45 to 55.

According to the process of the present invention, seed crystals are provided in step (1), and comprise one or more zeolitic materials having a CHA-type framework structure. According to said preferred embodiments, the seed crystals comprise any zeolitic material having a CHA-type framework structure, provided that a zeolitic material is crystallized in step (2), which is preferably a zeolitic material having the CHA-type framework structure, wherein more preferably the zeolitic material having a CHA-type framework structure comprised in the seed crystals is a zeolitic material obtained according to the inventive process, and wherein even more preferably the zeolitic material having a CHA-type framework structure comprised in the seed crystals is the same as the zeolitic material having a CHA-type framework structure which is then crystallized in step (2). Particularly preferred according to the present invention are seed crystals comprising one or more zeolites selected from the group consisting of (Ni(deta)₂)-UT-6, Chabazite, |Li-Na| [Al-Si-O]-CHA, DAF-5, Dehyd. Na-Chabazite, K-Chabazite, LZ-218, Linde D, Linde R, Phi, SSZ-62, UiO-21, Willhendersonite, ZK-14, ZYT-6, and mixtures of two or more thereof, wherein more preferably the seed crystals comprise one or more zeolites selected from the group consisting of(Ni(deta)₂)-UT-6, Chabazite, |Li-Na| [Al-Si-O]-CHA, DAF-5, Dehyd. Na-Chabazite, K-Chabazite (Iran), LZ-218, Linde D, Linde R, Phi, SSZ-62, UiO-21, Willhendersonite, ZK-14, ZYT-6, and mixtures of two or more thereof, and wherein even more preferably the seed crystals comprise Chabazite. According to an even more preferred embodiments Chabazite is employed as seed crystals in the inventive process, wherein preferably said Chabazite seed crystals are either obtainable according to the inventive process or have been obtained according to said process.

According to the inventive process, any suitable amount of seed crystals can be provided in the mixture according to step (1), provided that a zeolitic material is crystallized in step (2). In general, the amount of seed crystals contained in the mixture according to step (1) ranges from 0.1 to 20 wt.-% based on 100 wt.-% of YO₂ in the at least one source for YO₂, preferably from 0.3 to 10 wt.-%, more preferably from 0.5 to 5 wt.-%, and even more preferably from 1 to 3 wt.-%. According to particularly preferred embodiments of the inventive process, from 1.5 to 2.5 wt.-% of seed crystals according to any of the particular and preferred embodiments of the present invention are employed, based on 100 wt.-% of YO₂ in the at least one source for YO₂ provided in step (1) of the inventive process.

There is no particular restriction as to the amount of the one or more N,N,N-trimethyl-cyclohexylammonium cations which are provided in the mixture in step (1) of the inventive process provided that a zeolitic material having a CHA-type framewok structure may be crystallized in step (2). Thus, the molar ratio of the one or more N,N,N-trimethyl-cyclohexylammonium cations: YO₂ provided in the mixture in step (1) may be comprised in any of the particular range and preferred ranges as defined in the present invention. It is, however, particularly preferred that it is comprised in the range of from 0.01 to 2, wherein more preferably the molar ratio is comprised in the range of from 0.03 to 1, more preferably from 0.05 to 0.5, more preferably from 0.1 to 0.3, and even more preferably from 0.15 to 0.25. According to particularly preferred embodiments it is comprised in the range of from 0.18 to 0.22.

In step (1) according to the present invention, the mixture can be prepared by any conceivable means, wherein mixing by agitation is preferred, preferably by means of stirring.

In preferred embodiments of the inventive process, the mixture provided in step (1) further comprises one or more solvents. According to the inventive process, there is no particular restriction whatsoever neither with respect to the type and/or number of the one or more solvents, nor with respect to the amount in which they may be used in the inventive process provided that a zeolitic material having the CHA-type framework structure may be crystallized in step (2). According to the inventive process it is however preferred that the one or more solvents comprise water, and more preferably distilled water, wherein according to particularly preferred embodiments distilled water is used as the only solvent in the mixture provided in step (1).

As noted above, in preferred embodiments of the inventive process wherein one or more solvents are employed, there is no particular restriction as to the amount in which they may be used, wherein in particularly preferred embodiments employing water and more preferably distilled water, the H₂O : YO₂ molar ratio of the mixture may range by way of example anywhere from 3 to 50, wherein preferably the molar ratio employed is comprised in the range of from 4 to 30, more preferably of from 4.5 to 20, more preferably of from 5 to 15, and even more preferably of from 5.5 to 12. According to particularly preferred embodiments of the present invention wherein water and preferably distilled water is comprised among the one or more solvents provided in step (1) and even more preferably is the sole solvent used in the reaction mixture crystallized in step (2), the H₂O : YO₂ molar ratio is comprised in the range of from 6 to 10.

According to embodiments of the present invention which are alternatively preferred, the H₂O : YO₂ molar ratio of the mixture provided in step (1) is comprised in the range of from 3 to 100, wherein preferably the molar ratio employed is comprised in the range of from 5 to 50, more preferably of from 6 to 30, more preferably of from 7 to 20, and even more preferably of from 8 to 15. According to particularly preferred embodiments of the present invention wherein water and preferably distilled water is comprised among the one or more solvents provided in step (1) and even more preferably is the sole solvent used in the reaction mixture crystallized in step (2), the H₂O : YO₂ molar ratio is comprised in the range of from 9 to 12.

Concerning the further elements or compounds which may be contained in the mixture provided in step (1), there is no particular restriction according to the present invention in this respect, provided that a zeolitic material having the CHA-type framework structure may be obtained in step (2) of the inventive process. Thus, according to particular embodiments of the present invention, the mixture provided in step (1) may comprise one or more alkali metals M, wherein within the meaning of the present invention, the one or more alkali metals M preferably stands one or more elements selected from the group consisting of Li, Na, K, Rb, Cs, and combinations of two or more thereof, more preferably from the group consisting of Li, Na, K, and combinations of two or more thereof, wherein even more preferably the one of more alkali metals M stand for Na and/or K, and even more preferably for Na.

As regards particular embodiments of the present invention wherein the mixture provide in step (1) comprises one or more alkali metals M according to any of the particular and preferred meanings of the present invention, there is no particular restriction as to the amounts in which they may be contained in said mixture, provided that a zeolitic material having the CHA-type framework structure may be obtained in step (2) of the inventive process. According to particularly preferred embodiments of the present invention, however, the mixture provided in step (1) which is crystallized in step (2) contains 3 wt.-% or less of one or more alkali metals M based on 100 wt-% of YO₂. According to embodiments which are further preferred, the mixture provided in step (1) contains 1 wt.-% or less of one or more alkali metals M, more preferably 0.5 wt.-% or less, more preferably 0.1 wt.-% or less, more preferably 0.05 wt.-% or less, more preferably 0.01 wt.-% or less, more preferably 0.005 wt.-% or less, more preferably 0.001 wt.-% or less, more preferably 0.0005 wt.-% or less, and even more preferably 0.0001 wt.-% or less of one or more metals M based on 100 wt.-% of YO₂. According to particularly preferred embodiments of the present invention it is even further preferred that the mixture provided in step (1) and crystallized in step (2) contains no alkali metal M.

The present invention further comprises preferred embodiments of the inventive process wherein one or more sources of one or more elements suitable for isomorphous substitution of at least a portion of the Y atoms and/or of the X atoms in the zeolite framework structure having the CHA-type framework structure is added to the mixture according to step (1). In this respect, there is no particular restriction according to the present invention neither as to the type and/or number nor as to the amount of which said one or more sources of one or more elements suitable for isomorphous substitution may be employed. Thus, in principle, any one or more elements suitable for isomorphous substitution may be employed provided that they are at least partly incorporated into the framework structure of the zeolitic material crystallized in step (2) of the inventive process. According to preferred embodiments, the one or more elements are selected from the group consisting of B, Fe, Ti, Sn, Ga, Ge, Zr, V, Nb, Cu, Zn, Li, Be, and mixtures of two or more thereof, wherein more preferably the one or more elements are selected from the group consisting of B, Fe, Ti, Sn, Zr, Cu, and mixtures of two or more thereof. According to particularly preferred embodiments of the present invention, the one or more elements suitable for isomorphous substitution provided in step (1) comprise Fe and/or Cu, preferably Fe, wherein even more preferably the one or more elements are Fe and/or Cu. According to embodiments of the present invention which are particularly preferred, Cu is added as the element suitable for isomorphous substitution of at least a portion of the Y and/or of the X atoms in the mixture according to step (1).

As noted above, no particular restriction applies with respect to the amount of the one or more sources for isomorphous substitution preferably provided in the mixture in step (1) of the inventive process. Thus, by way of example, the molar ratio of YO₂ to the one or more elements suitable for isomorphous substitution in the mixture of step (1) of the inventive process may be comprised in the range of anywhere from 5 to 200, wherein it is preferred that said ratio is comprised in the range of from 10 to 100, more preferably of from 20 to 70, and even preferably of from 25 to 50. According to particularly preferred embodiments of the present invention wherein one or more elements suitable for isomorphous substitution are included in the mixture of step (1), it is preferred that the molar ratio of YO₂ to said one or more elements is comprised in the range of from 30 to 40.

As regards the crystallization performed in step (2) of the inventive process, no particular restriction applies according to the present invention as to the actual means employed for allowing for the crystallization of a zeolitic material from the mixture of step (1). Thus, any suitable means may be employed wherein it is preferred that the crystallization is achieved by heating of the mixture of step (1). According to said preferred embodiments, no particular restriction again applies with respect to the temperature at which said crystallization may be achieved, wherein it is preferred that the crystallization is conducted under heating at a temperature comprised in the range of from 90 to 210°C °C, more preferably of from 110 to 200°C, more preferably of from 120 to 190°C, and even more preferably of from 135 to 180°C. According to particularly preferred embodiments of the present invention, the preferred heating of the mixture provided in step (1) in step (2) for the crystallization of a zeolitic material is conducted at a temperature comprised in the range of from 150 to 170°C.

Concerning the heating preferably employed in step (2) of the inventive process as means for the crystallization of the zeolitic material, said heating may in principle be conducted under any suitable pressure provided that crystallization is achieved. In preferred embodiments of the present invention, the mixture according to step (1) is subjected in step (2) to a pressure which is elevated with regard to normal pressure. The term "normal pressure" as used in the context of the present invention relates to a pressure of 101,325 Pa in the ideal case. However, this pressure may vary within boundaries known to the person skilled in the art. By way of example, this pressure can be in the range of from 95,000 to 106,000 or of from 96,000 to 105,000 or of from 97,000 to 104,000 or of from 98,000 to 103,000 or of from 99,000 to 102,000 Pa.

In preferred embodiments of the inventive process wherein a solvent is present in the mixture according to step (1), it is furthermore preferred that heating in step (2) is conducted under solvothermal conditions, meaning that the mixture is crystallized under autogenous pressure of the solvent which is used, for example by conducting heating in an autoclave or other crystallization vessel suited for generating solvothermal conditions. In particularly preferred embodiments wherein the solvent comprises water, preferably distilled water, heating in step (2) is accordingly preferably conducted under hydrothermal conditions.

The apparatus which can be used in the present invention for crystallization is not particularly restricted, provided that the desired parameters for the crystallization process can be realized, in particular with respect to the preferred embodiments requiring particular crystallization conditions. In the preferred embodiments conducted under solvothermal conditions, any type of autoclave or digestion vessel can be used.

Furthermore, as regards the period in which the preferred heating in step (2) of the inventive process is conducted for crystallizing the zeolitic material, there is again no particular restriction in this respect provided that the period of heating is suitable for achieving crystallization. Thus, by way of example, the period of heating may range anywhere from 0.5 to 50 d, wherein preferably heating is conducted from 1 to 30 d, more preferably from 1.5 to 13 d, more preferably from 2 to 10 d, more preferably from 2 to 7 d, more preferably from 2.5 to 5 d, and even more preferably from 2.5 to 4.5 d. According to particularly preferred embodiments heating in step (2) of the inventive process is conducted for a period of from 2.5 to 3.5 d.

According to preferred embodiments of the present invention, wherein the mixture is heated in step (2), said heating may be conducted during the entire crystallization process or during only one or more portions thereof, provided that a zeolitic material is crystallized. Preferably, heating is conducted during the entire duration of crystallization.

Further regarding the means of crystallization in step (2) of the inventive process, it is principally possible according to the present invention to perform said crystallization either under static conditions or by means of agitating the mixture. According to embodiments involving the agitation of the mixture, there is no particular restriction as to the means by which said agitation may be performed such that any one of vibrational means, rotation of the reaction vessel, and/or mechanical stirring of the reaction mixture may be employed to this effect wherein according to said embodiments it is preferred that agitation is achieved by stirring of the reaction mixture. According to alternatively preferred embodiments, however, crystallization is performed under static conditions, i.e. in the absence of any particular means of agitation during the crystallization process.

In general, the process of the present invention can optionally comprise further steps for the work-up and/or further physical and/or chemical transformation of the zeolitic material crystallized in step (2) from the mixture provided in step(1). The crystallized material can for example be subject to any sequence of isolation and/or washing procedures, wherein the zeolitic material obtained from crystallization in step (2) is preferably subject to at least one isolation and at least one washing procedure.

Isolation of the crystallized product can be achieved by any conceivable means. Preferably, isolation of the crystallized product can be achieved by means of filtration, ultrafiltration, diafiltration, centrifugation and/or decantation methods, wherein filtration methods can involve suction and/or pressure filtration steps.

With respect to one or more optional washing procedures, any conceivable solvent can be used. Washing agents which may be used are, for example, water, alcohols, such as methanol, ethanol or propanol, or mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol, such as water and methanol or water and ethanol or water and propanol or water and methanol and ethanol or water and methanol and propanol or water and ethanol and propanol or water and methanol and ethanol and propanol. Water or a mixture of water and at least one alcohol, preferably water and ethanol, is preferred, distilled water being very particularly preferred as the only washing agent.

Preferably, the separated zeolitic material is washed until the pH of the washing agent, preferably the washwater, is in the range of from 6 to 8, preferably from 6.5 to 7.5.

Furthermore, the inventive process can optionally comprise one or more drying steps. In general, any conceivable means of drying can be used. Drying procedures preferably include heating and/or applying vacuum to the zeolitic material. In envisaged embodiments of the present invention, one or more drying steps may involve spray drying, preferably spray granulation of the zeolitic material.

In embodiments which comprise at least one drying step, the drying temperatures are preferably in the range of from 25°C to 150°C, more preferably of from 60 to 140°C, more preferably of from 70 to 130°C and even more preferably in the range of from 75 to 125°C. The durations of drying are preferably in the range of from 2 to 48 h, more preferably in the range of 4 to 36 hours, more preferably of from 6 to 24 h, and even more preferably of from 8 to 12 h.

In general, the optional washing and/or isolation and/or ion-exchange procedures comprised in the inventive process can be conducted in any conceivable order and repeated as often as desired.

Therefore, according to preferred embodiments of the present invention, the process for the preparation of a zeolitic material further comprises one or more of the following steps of
(3) isolating the zeolitic material, preferably by filtration,
   and/or
(4) washing the zeolitic material,
   and/or
(5) drying the zeolitic material,
   and/or
(6) subjecting the zeolitic material to an ion-exchange procedure,
wherein the steps (3) and/or (4) and/or (5) and/or (6) can be conducted in any order, and wherein one or more of said steps is preferably repeated one or more times.

Thus, according to the inventive process, the zeolitic material crystallized in step (2) can optionally be subject to at least one step of an ion-exchange procedure, wherein the term "ion-exchange" according to the present invention generally refers to non-framework ionic elements and/or molecules contained in the zeolitic material which are accordingly exchanged by other ions, which are generally provided from an external source. Preferably, the non-framework ionic element comprises one or more of the one or more alkali metals M preferably comprised in the zeolitic material having a CHA-type framework structure crystallized in step (2), more preferably Na and/or K, and even more preferably Na.

In general, any conceivable ion-exchange procedure with all possible ionic elements and/or molecules can be conducted on the zeolitic material. Preferably, as ionic elements at least one cation and/or cationic element is employed which is preferably selected from the group consisting of H⁺, NH₄⁺, Sr, Zr, Cr, Mg, Mo, Fe, Co, Ni, Cu, Zn, Ru, Rh, Pd, Ag, Os, Ir, Pt, Au, and mixtures of two or more thereof, more preferably from the group consisting of H⁺, NH₄⁺, Sr, Cr, Mo, Fe, Co, Ni, Cu, Zn, Ag, and mixtures of two or more thereof, more preferably from the group consisting of H⁺, NH₄⁺, Cr, Mg, Mo, Fe, Ni, Cu, Zn, Ag, and mixtures of two or more thereof. According to particularly preferred embodiments of the present invention, the one or more cations and/or cationic elements are selected from the group consisting of Mg, Mo, Fe, Ni, Cu, Zn, Ag, and mixtures of two or more thereof. Preferably, the zeolitic material is first ion-exchanged with H⁺ and/or NH₄⁺, and more preferably with NH₄⁺, before being subject to a further ion-exchange procedure, more preferably before being subject to ion-exchange with at least one cation and/or cationic element selected from the group consisting of Sr, Zr, Cr, Mg, Mo, Fe, Co, Ni, Cu, Zn, Ru, Rh, Pd, Ag, Os, Ir, Pt, Au, and mixtures of two or more thereof, more preferably from the group consisting of Sr, Cr, Mo, Fe, Co, Ni, Cu, Zn, Ag, and mixtures of two or more thereof, more preferably from the group consisting of Cr, Mg, Mo, Fe, Ni, Cu, Zn, Ag, and mixtures of two or more thereof, wherein even more preferably the at least one cation and/or cationic element is selected from the group consisting of Mg, Mo, Fe, Ni, Cu, Zn, Ag, and mixtures of two or more thereof. As regards preferred embodiments of the present invention wherein the zeolitic material is first ion-exchanged with an NH⁴⁺ before being subject to a further ion-exchange procedure, this may also be achieved by transformation of H⁺ ions already contained in the zeolitic material into NH⁴⁺ ions by appropriate treatment with ammonia or any precursor compound thereof. As regards the one or more ionic non-framework elements which are ion-exchanged, there is no particular restriction according to the present invention as to which ionic non-framework elements present in the zeolitic material may be ion-exchanged according to the aforementioned preferred embodiments, wherein preferably the one or more ionic non-framework elements to be exchanged comprise H⁺ and/or an alkali metal, the alkali metal preferably being selected from the group consisting of Li, Na, K, Cs, and combinations of two or more thereof, more preferably from the group consisting of Li, Na, K, and combinations of two or more thereof, wherein more preferably the alkali metal is Na and/or K, and even more preferably Na.

According to a further embodiment of the inventive process, the zeolitic material crystallized in step (2) is directly subject to at least one step of drying, preferably to spray drying and or spray granulation, without isolating, washing, or drying of the zeolitic material beforehand. Directly subjecting the mixture obtained from step (2) of the inventive process to a spray drying or spray granulation stage has the advantage that isolation and drying is performed in a single stage. Consequently, according to this embodiment of the present invention, an even more preferred process is provided wherein the number of post-synthesis workup steps is minimized, as a result of which the zeolitic material can be obtained from a highly simplified process.

According to a further embodiment of the present invention, the zeolitic material obtained from crystallization in step (2) is subject to at least one isolating step prior to being subject to at least one ion-exchange procedure, preferably to at least one isolating step followed by at least one washing step, and more preferably to at least one isolating step followed by at least one washing step followed by at least one drying step.

In general, the zeolitic material obtained according to the inventive process has the CHA-type framework structure. Among the preferred zeolitic materials comprising one or more zeolites having the CHA-type framework structure, there is no particular restriction neither with respect to the type and/or number thereof, nor with respect to the amount thereof in the zeolitic material. According to preferred embodiments of the present invention, the one or more zeolites having the CHA framework structure comprise one or more zeolites selected from the group consisting of (Ni(deta)₂)-UT-6, Chabazite, |Li-Na| [Al-Si-O]-CHA, DAF-5, Dehyd. Na-Chabazite, K-Chabazite, LZ-218, Linde D, Linde R, Phi, SSZ-62, UiO-21, Willhendersonite, ZK-14, ZYT-6, and mixtures of two or more thereof, more preferably from the group consisting of (Ni(deta)₂)-UT-6, Chabazite, |Li-Na| [Al-Si-O]-CHA, DAF-5, Dehyd. Na-Chabazite, K-Chabazite (Iran), LZ-218, Linde D, Linde R, Phi, SSZ-62, UiO-21, Willhendersonite, ZK-14, ZYT-6, and combinations of two or more thereof, wherein even more preferably the zeolitic material formed in step (2) comprises Chabazite.

According to the inventive process, it is particularly preferred that at no point does the mixture provided in step (1) and crystallized in step (2) contain any substantial amount of an organic structure directing agent other than the one or more N,N,N-trimethyl-cyclohexylammonium compounds according to the present invention, wherein such organic structure directing agents other than the N,N,N-trimethyl-cyclohexylammonium compounds used in the inventive process preferably designate any other conceivable organotemplates which may suitably be used in the synthesis of zeolitic materials having a CHA-type framework structure either by themselves, or in combination with the one or more N,N,N-trimethyl-cyclohexylammonium compounds according to the present invention. According to a preferred meaning of the present invention, the organic structure directing agent other than the one or N,N,N-trimethyl-cyclohexylammonium compounds designates any one or more compounds selected from dialkyl amines, and/or heterocyclic amines, including any combination of two or more thereof, wherein preferably said one or more other organic structure directing agent is selected from the group consisting of di(C₁ - C₅)alkyl amines, oxygen containing heteroxyclic amines with 5 to 8 ring members, and combinations of two or more thereof, more preferably from the group consisting of di(C₂ - C₄)alkyl amines, oxygen containing heteroxyclic amines with 5 to 7 ring members, and combinations of two or more thereof, more preferably from the group consisting of di(C₂ - C₃)alkyl amines, oxygen containing heteroxyclic amines with 5 or 6 ring members, and combinations of two or more thereof, and/or related organotemplates such as any suitable N-alkyl-3-quinuclidinol compound, N,N,N-trialkyl-exoaminonorbornane compound, N,N,N-trimethyl-1-adamantylammonium compound, N,N,N-trimethyl-2-adamantylammonium compound, N,N,N-trimethylcyclohexylammonium compound, N,N-dimethyl-3,3-dimethylpiperidinium compound, N,N-methylethyl-3,3-dimethylpiperidinium compound, N,N-dimethyl-2-methylpiperidinium compound, 1,3,3,6,6-pentamethyl-6-azonio-bicyclo(3.2.1)octane compound, N,N-dimethylcyclohexylamine compound, or any suitable N,N,N-trimethylbenzylammonium compound, including combinations of two or more thereof. According to particularly preferred embodiments of the present invention, the mixture provided in step (1) does not contain any substantial amount of a trimethyl benzyl ammonium containing compound, and preferably not any substantial amount of a trialkyl benzyl ammonium compound, wherein even more preferably the mixture provided in step (1) only contains one or more *N,N,N*-trimethyl-cyclohexylammonium compounds and preferably *N*,*N*,*N*-trimethyl-cyclohexylammonium hydroxide as structure directing agent for the crystallization of a zeolitic material having a CHA-type framework structure in step (2).

Therefore, it is preferred according to the present invention that the mixture provided in step (1) does not contain any substantial amount of a trimethyl benzyl ammonium containing compound, preferably of a trialkyl benzyl ammonium compound wherein preferably the mixture provided in step (1) does not contain any substantial amount of an organotemplate other than the one or more N,N,N-trimethyl-cyclohexylammonium compounds as structure directing agent, wherein more preferably the mixture provided in step (1) does not contain any substantial amount of a structure directing agent other than the one or more N,N,N-trimethyl-cyclohexylammonium compounds, and wherein even more preferably, the mixture provided in step (1) only contains one or more *N*,*N*,*N*-trimethyl-cyclohexylammonium compounds and preferably *N*,*N*,*N*-trimethyl-cyclohexylammonium hydroxide as structure directing agent for the crystallization of a zeolitic material having a CHA-type framework structure in step (2).

According to specific embodiments of the present invention, not more than an impurity of said one or more other organic structure directing agent may, however, be present in the reaction mixture, for example, as a result of said one or more other organic structure directing agents still being present in seed crystals used in the inventive process. Such other organotemplates contained in seed crystal material may not, however, participate in the crystallization process since they are trapped within the seed crystal framework and therefore may not act structure directing agents within the meaning of the present invention.

Within the meaning of the present invention, the term "substantially" as employed in the present application with respect to the amount of any one or more organotemplate other than the one or more *N*,*N*,*N*-trimethyl-cyclohexylammonium compounds as structure directing agent contained in the mixture provided in step (1) indicates an amount of 0.1 wt.-% or less of the total amount of any other one or more organotemplate, preferably 0.05 wt.-% or less, more preferably 0.001 wt.-% or less, more preferably 0.0005 wt.-% or less, and even more preferably 0.0001 wt.-% or less thereof. Said amounts of one or more other organotemplates, if at all present an any one of the materials used in the synthetic process, may also be denoted as "impurities" or "trace amounts" within the meaning of the present invention. Furthermore, it is noted that the terms "organotemplate" and "organic structure directing agent" are synonymously used in the present application.

The present invention further relates to a zeolitic material having a CHA-type framework structure which is either obtained by the process according to the present invention or by any conceivable process which leads to a zeolitic material having a CHA-type framework structure as obtainable according to the inventive process, wherein in particular the inventive process designates any of the particular and preferred embodiments thereof as defined in the present application. Furthermore, the present invention also relates to a synthetic zeolitic material having a CHA-type framework structure comprising YO₂ and X₂O₃, wherein Y is Si and X is Al, said material having an X-ray diffraction pattern comprising at least the following reflections:

| Diffraction angle 2θ/° [Cu K(alpha 1)] | Intensity (%) |
|---|---|
| 9.44 - 9.88 | 29-92 |
| 16.03 - 16.55 | 32 - 79 |
| 17.81 - 18.13 | 12-42 |
| 20.62 - 21.30 | 100 |
| 25.02 - 25.42 | 25-70 |
| 30.83 - 31.43 | 39-73 |

wherein 100% relates to the intensity of the maximum peak in the X-ray powder diffraction pattern, and wherein preferably said zeolitic material is preferably obtainable/and or obtained, and preferably obtained according to any one of the particular and preferred embodiments of the inventive process.

According to preferred embodiments of the present invention, the synthetic zeolitic material having an CHA-type framework structure has an X-ray diffraction pattern comprising at least the following reflections:

| Diffraction angle 2θ/° [Cu K(alpha 1)] | Intensity (%) |
|---|---|
| 9.55 - 9.77 | 34 - 87 |
| 16.16 - 16.42 | 41 - 69 |
| 17.89 - 18.05 | 15-38 |
| 20.79 - 21.13 | 100 |
| 25.12 - 25.32 | 29-66 |
| 30.98 - 31.28 | 42 - 70 |

wherein again 100 % relates to the intensity of the maximum peak in the X-ray powder diffraction pattern.

As regards the ²⁷Al MAS NMR of the inventive zeolitic materials having the CHA-type framework structure comprising X₂O₃ wherein X is Al, there is no particular restriction as to the number and/or respective ppm values and/or respective intensities of the signals which may be comprised in the NMR spectrum. According to preferred embodiments of the present invention, however, the ²⁷Al MAS NMR spectrum of the inventive materials comprises a first peak (P1) comprised in the range of from 52.3 to 58.6 ppm and a second peak (P2) comprised in the range of from -2.3 to -4.1 ppm, wherein the integration of the first and second peaks in the ²⁷Al MAS NMR spectrum of the zeolitic material preferably offers a ratio of the integration values P1 : P2 of 1 : (0 - 0.22). More preferably, the first peak (P1) is comprised in the range of from 52.9 to 57.8 ppm, and the second peak (P2) is comprised in the range of from -2.5 to -3.8 ppm, wherein the integration of the first and second peaks offers a ratio of the integration values P1 : P2 of 1 : (0.001 - 0.2), more preferably of 1 : (0.005 - 0.18). More preferably, the first peak (P1) is comprised in the range of from 53.5 to 57.0 ppm and the second peak (P2) is comprised in the range of from -2.7 to -3.6 ppm, wherein the integration of the first and second peaks offers a ratio of the integration values P1 : P2 of 1 : (0.01 - 0.15), and more preferably of 1 : (0.02 - 0.13). According to particularly preferred embodiments of the present invention, the ²⁷Al MAS NMR of the zeolitic material comprises a first peak (P1) comprised in the range of from 54.1 to 56.2 ppm and a second peak (P2) comprised in the range of from -2.8 to -3.4 ppm, wherein the integration of the first and second peaks in the ²⁷Al MAS NMR of the zeolitic material preferably offers a ratio of the integration values P1 : P2 of 1 : (0.03 - 0.12).

There is no particular restriction according to the present invention as to the state in which the zeolitic material is subject to the ²⁷Al MAS NMR experiment. It is however preferred, in particular regarding the intensity of the first and second peaks observed in the ²⁷Al MAS NMR spectrum that the inventive zeolitic material having a CHA-type framework structure has not been subject to a dealumination treatment or even more preferably to any treatment susceptible of substantially influencing the content of framework aluminum present in the zeolitic material as-synthesized. Accordingly, according to a particularly preferred embodiment of the present invention, the ²⁷Al MAS NMR of the zeolitic material according to any of the particular and preferred embodiments wherein X comprises Al refers to a ²⁷Al MAS NMR spectrum and to the according values obtained therein wherein the zeolitic material has not been subject to any post-synthetic treatment and is therefore an untreated zeolitic material as-synthesized.

Therefore, embodiments of the zeolitic material having a CHA-type framework structure are preferred according to the present invention wherein the ²⁷Al MAS NMR of the zeolitic material, and preferably of the untreated zeolitic material as-synthesized, comprises:
a first peak (P1) in the range of from 52.3 to 58.6 ppm, preferably of from 52.9 to 57.8 ppm, more preferably of from 53.5 to 57.0 ppm, and even more preferably of from 54.1 to 56.2 ppm; and
a second peak (P2) in the range of from -2.3 to -4.1 ppm, preferably of from -2.5 to -3.8 ppm, more preferably of from -2.7 to -3.6 ppm, and even more preferably of from - 2.8 to -3.4 ppm;
wherein the integration of the first and second peaks in the ²⁷Al MAS NMR of the zeolitic material preferably offers a ratio of the integration values P1 : P2 comprised in the range of from 1 : (0 - 0.22), more preferably of from 1 : (0.001 - 0.2), more preferably of from 1 : (0.005 - 0.18), more preferably of from 1 : (0.01 - 0.15), more preferably of from 1 : (0.02 - 0.13), and even more preferably of from 1 : (0.03 - 0.12).

There is no particular restriction according to the present invention as to the standard used in the ²⁷Al MAS NMR experiments for obtaining the respective values for the chemical shift in ppm in the ²⁷Al MAS NMR spectra according to particular and preferred embodiments of the present invention, wherein preferably an external standard is used. According to particularly preferred embodiments, an aqueous 1 M solution of AlCl₃ is used as an external zero reference in the ²⁷Al MAS NMR experiment.

According to the present invention, the inventive zeolitic material having a CHA-type framework structure has an IR-spectrum which comprises:
a first absorption band (B'1) in the range of from 3,550 to 3,660 cm⁻¹, preferably from 3,580 to 3,635 cm⁻¹, more preferably from 3,595 to 3,620 cm⁻¹, more preferably from 3,600 to 3,615 cm⁻¹, and even more preferably from 3,606 to 3,611 cm⁻¹;
a second absorption band (B'2) in the range of from 3,450 to 3,545 cm⁻¹, preferably from 3,470 to 3,530 cm⁻¹, more preferably from 3,480 to 3,520 cm⁻¹, more preferably from 3,490 to 3,510 cm⁻¹, and even more preferably from 3,499 to 3,502 cm⁻¹;
a third absorption band (B'3) in the range of from 1,800 to 1,930 cm⁻¹, preferably from 1,830 to 1,910 cm⁻¹, more preferably from 1,850 to 1,890 cm⁻¹, more preferably from 1,860 to 1,880 cm⁻¹, and even more preferably from 1,865 to 1,875 cm⁻¹;

wherein the ratio of the maximum absorbance of the first absorption band to the third absorption band B'1 : B'3 is comprised in the range of from 0.30 to 2.5, preferably of from 0.50 to 2.0, more preferably of from 0.70 to 1.5, more preferably of from 0.80 to 1.2, more preferably of from 0.85 to 1.0, and even more preferably of from 0.87 to 0.91; and
wherein the ratio of the maximum absorbance of the second absorption band to the third absorption band B'2 : B'3 is comprised in the range of from 0.1 to 3.0, preferably of from 0.3 to 2.0, more preferably of from 0.5 to 1.5, more preferably of from 0.6 to 1.0, more preferably of from 0.7 to 0.8, and even more preferably of from 0.72 to 0.76.

According to the present invention, it is preferred that at least a portion of the Y atoms and/or of the X atoms of the CHA-type framework structure of the zeolitic materials is isomorphously substituted by one or more elements. In this respect, there is no particular restriction as to the one or more elements which may substitute Y atoms and/or X atoms of the CHA-type framework structure wherein preferably said elements are selected from the group consisting of B, Fe, Ti, Sn, Ga, Ge, Zr, V, Nb, Cu, Zn, Li, Be, and mixtures of two or more thereof, wherein even more preferably, the one or more elements are selected from the group consisting of B, Fe, Ti, Sn, Zr, Cu, and mixtures of two or more thereof. According to particularly preferred embodiments and in particular according to particularly preferred embodiments of the alternative zeolitic material of the present invention, at least a portion of the Y atoms and/or of the X atoms in the CHA-type framework structure is isomorphously substituted by Fe and/or Cu, and preferably by Cu.

As regards the amount of the one or more elements in the zeolitic materials which substitute at least a portion of the Y atoms and/or of the X atoms in the CHA-type framework structure, no particular restriction applies according to the present invention. Thus, by way of example, the molar ratio of YO₂ to the one or more elements isomorphously substituted in the CHA-type framework structure may range anywhere from 5 to 100, wherein the molar ratio is preferably comprised in the range of from 10 to 80, and even more preferably of from 20 to 60. According to particularly preferred embodiments, the molar ratio of YO₂ to the one or more elements isomorphously substituting Y atoms and/or X atoms in the CHA-type framework structure are comprised in the range of from 25 to 50.

As regards the CHA-type framework structure of the inventive zeolitic material, besides YO₂ and X₂O₃ contained therein as framework elements, no particular restriction applies as to any other elements which may be contained therein as further framework elements. Thus, besides or in addition to the preferred elements suitable for isomorphous substitution according the particular and preferred embodiments of the present invention which may be contained in the CHA-type framework structure of the zeolitic material, any further one or more elements than the aforementioned may also be contained therein as framework elements in addition to the one or more tetravalent elements Y and the one or more trivalent elements X. According to particular embodiments of the present invention, however, it is preferred that the zeolitic material having a CHA-type framework does not contain any substantial amount of P and/or As therein as framework element. Within the meaning of the present invention, the term "substantial" with respect to the amount of an element contained in the framework structure of the inventive zeolitic material preferably indicates an amount of 5 wt.-% or less of a framework element based on 100 wt-% of YO₂ contained in the framework structure, preferably an amount of 1 wt.-% or less, more preferably of 0.5 wt.-% or less, more preferably of 0.1 wt.-% or less, more preferably of 0.05 wt.-% or less, more preferably of 0.01 wt.-% or less, more preferably of 0.005 wt.-% or less, more preferably of 0.001 wt.-% or less, more preferably of 0.0005 wt.-% or less, and even more preferably of 0.0001 wt.-% or less of a framework element based on 100 wt.-% of YO₂.

According to said particularly preferred embodiments wherein zeolitic material having a CHA-type framework does not contain any substantial amount of P and/or As, it is yet further preferred according to the present invention that the CHA-type framework does not contain any substantial amount of one or more elements selected from the group consisting of P, As, V, and combinations of two or more thereof, and more preferably no substantial amount of any one or more elements selected from the group consisting of P, As, Sb, Bi, V, Nb, Ta, and combinations of two or more thereof. According to yet further particularly preferred embodiments of the present invention, the inventive zeolitic material having a CHA-type framework structure does not contain any substantial amount of any pentavalent elements Z as framework element.

It is further preferred according to the present invention that the zeolitic material does not comprise any substantial amount of SSZ-13 and/or SSZ-15, wherein within the meaning of the present invention "substantial" with respect to the amount of SSZ-13 and/or SSZ-15 refers to an amount of 5 wt.-% or less thereof based on 100 wt-% of the zeolitic material having a CHA-type framework structure according to any of the particular and preferred embodiments of the present invention, and preferably to an amount of 1 wt.-% or less, more preferably of 0.5 wt.-% or less, more preferably of 0.1 wt.-% or less, more preferably of 0.05 wt.-% or less, more preferably of 0.01 wt.-% or less, more preferably of 0.005 wt.-% or less, more preferably of 0.001 wt.-% or less, more preferably of 0.0005 wt.-% or less, and even more preferably of 0.0001 wt.-% or less of SSZ-13 and/or SSZ-15.

Concerning YO₂ : X₂O₃ molar ratio displayed by the zeolitic materials of the present invention, any conceivable molar ratio may be adopted. Thus, by way of example, the YO₂ : X₂O₃ molar ratio of the inventive materials may be comprised anywhere in the range of from 2 to 200, wherein preferably the YO₂ : X₂O₃ molar ratio is comprised in the rage of from 5 to 100, more preferably of from 10 to 60, more preferably of from 15 to 50, and even more preferably of from 20 to 40. According to particularly preferred embodiments of the present invention, the YO₂ : X₂O₃ molar ratio of the zeolitic materials is comprised in the range of from 22 to 31.

According to the present invention, the zeolitic materials having an CHA-type framework structure comprise YO₂. This Y stands for Si.

As regards X₂O₃ comprised in the CHA-framework structure of the zeolitic materials, X stands for Al.

In addition to the framework elements of the zeolitic materials of the present invention having an CHA-type framework structure, said zeolitic materials preferably further contains one or more types of non-framework elements which do not constitute the framework structure and are accordingly present in the pores and/or cavities formed by the framework structure and typical for zeolitic materials in general. In this respect, there is no particular restriction as to the types of non-framework elements which may be contained in the zeolitic materials, nor with respect to the amount in which they may be present therein. It is, however, preferred that the zeolitic materials comprise one or more cation and/or cationic elements as ionic non-framework elements, wherein again no particular restriction applies as to the type or number of different types of ionic non-framework elements which may be present in the zeolitic materials, nor as to their respective amount. According to preferred embodiments of the present invention, the ionic non-framework elements preferably comprise one or more cations and/or cationic elements selected from the group consisting of H⁺, NH₄⁺, Mg, Sr, Zr, Cr, Mo, Fe, Co, Ni, Cu, Zn, Ru, Rh, Pd, Ag, Os, Ir, Pt, Au, and mixtures of two or more thereof, wherein more preferably these are selected from the group consisting of H⁺, NH₄⁺, Mg, Sr, Cr, Mo, Fe, Co, Ni, Cu, Zn, Ag, and mixtures of two or more thereof, more preferably from the group consisting of H⁺, NH₄⁺, Mg, Cr, Mo, Fe, Ni, Cu, Zn, Ag, and mixtures of two or more thereof. According to particularly preferred embodiments of the present invention, the ionic non-framework elements comprise one or more cations and/or cationic elements selected from the group consisting of Mg, Mo, Fe, Ni, Cu, Zn, Ag, and mixtures of two or more thereof.

There is no particular restriction according to the present invention as to the suitable physical and/or chemical characteristics of the inventive zeolitic materials. Thus, as regards for example the porosity and/or surface area of the inventive materials, these may adopt any suitable values. Thus, as regards the BET surface area of the zeolitic materials as determined according to DIN 66135, it may accordingly range anywhere from 100 to 850 m²/g, wherein preferably the surface area of the inventive zeolitic materials is comprised in the range of from 200 to 800 m²/g, more preferably from 300 to 750 m²/g, more preferably from 400 to 720 m²/g, more preferably from 500 to 700 m²/g, and even more preferably from 550 to 680 m²/g. According to particularly preferred embodiments of the present invention, the BET surface area of the zeolitic materials as determined according to DIN 66135 ranges from 600 to 660 m²/g.

In general, there is no particular restriction according to the present invention as to the specific type or types of zeolitic materials having a CHA-type framework which may be contained in the inventive zeolitic material. It is, however, preferred that the inventive zeolitic material comprises one or more zeolites selected from the group consisting of (Ni(deta)₂)-UT-6, Chabazite, |Li-Na| [Al-Si-O]-CHA, DAF-5, Dehyd. Na-Chabazite, K-Chabazite, LZ-218, Linde D, Linde R, Phi, SSZ-62, UiO-21, Willhendersonite, ZK-14, ZYT-6, and combinations of two or more thereof. More preferably the inventive zeolitic material having a CHA-type framework structure comprises one or more zeolites selected from the group consisting of (Ni(deta)₂)-UT-6, Chabazite, |Li-Na| [Al-Si-O]-CHA, DAF-5, Dehyd. Na-Chabazite, K-Chabazite (Iran), LZ-218, Linde D, Linde R, Phi, SSZ-62, UiO-21, Willhendersonite, ZK-14, ZYT-6, and combinations of two or more thereof. According to particularly preferred embodiments of the present invention, the inventive zeolitic material comprises Chabazite, wherein even more preferably the inventive zeolitic material according to particular and preferred embodiments of the present invention is Chabazite.

Depending on the specific needs of its application, the zeolitic material of the present invention can be employed as such, like in the form of a powder, a spray powder or a spray granulate obtained from above-described separation techniques, e.g. decantation, filtration, centrifugation, or spraying.

In many industrial applications, it is often desired on the part of the user not to employ the zeolitic material as powder or sprayed material, i.e. the zeolitic material obtained by the separation of the material from its mother liquor, optionally including washing and drying, and subsequent calcination, but a zeolitic material which is further processed to give moldings. Such moldings are required particularly in many industrial processes, e.g. in many processes wherein the zeolitic material of the present invention is employed as catalyst or adsorbent.

Accordingly, disclosed herein is also a molding comprising the inventive zeolitic material.

In general, the powder or sprayed material can be shaped without any other compounds, e.g. by suitable compacting, to obtain moldings of a desired geometry, e.g. tablets, cylinders, spheres, or the like.

Preferably, the powder or sprayed material is admixed with or coated by a suitable refractory binder. In general, suitable binders are all compounds which impart adhesion and/or cohesion between the zeolitic material particles to be bonded which goes beyond the physisorption which may be present without a binder. Examples of such binders are metal oxides, such as, for example, SiO₂, Al₂O₃, TiO₂, ZrO₂ or MgO or clays, or mixtures of two or more of these compounds. Naturally occurring clays which can be employed include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. In addition, the zeolitic material according to the present invention can be composited with a porous matrix material such as silica-alumina, silica-magnesia, silica-zirconia, silica-thoria, silica-beryllia and silica-titania as well as ternary compositions such as silica-alumina-thoria, silica-alumina-zirconia, silica-alumina-magnesia and silica-magnesia-zirconia.

The zeolitic material of the present invention may therefore also be provided in the form of extrudates, pellets, tablets or particles of any other suitable shape, for use as a packed bed of particulate catalyst, or as shaped pieces such as plates, saddles, tubes, or the like.

Also preferably, the powder or the sprayed material, optionally after admixing or coating by a suitable refractory binder as described above, is formed into a slurry, for example with water, which is deposited upon a suitable refractory carrier. The slurry may also comprise other compounds such as, e.g., stabilizers, defoamers, promoters, or the like. Typically, the carrier comprises a member, often referred to as a "honeycomb" carrier, comprising one or more refractory bodies having a plurality of fine, parallel gas flow passages extending there through. Such carriers are well known in the art and may be made of any suitable material such as cordierite or the like.

In general, the zeolitic material described above can be used as molecular sieve, adsorbent, catalyst, catalyst support or binder thereof. For example, the zeolitic material can be used as molecular sieve to dry gases or liquids, for selective molecular separation, e.g. for the separation of hydrocarbons or amines; as ion exchanger; as chemical carrier; as adsorbent, in particular as adsorbent for the separation of hydrocarbons or amines; or as a catalyst. Most preferably, the zeolitic material according to the present invention is used as a catalyst and/or as a catalyst support.

According to a preferred embodiment of the present invention, the zeolitic material of the invention is used in a catalytic process, preferably as a catalyst and/or catalyst support, and more preferably as a catalyst. In general, the zeolitic material of the invention can be used as a catalyst and/or catalyst support in any conceivable catalytic process, wherein processes involving the conversion of at least one organic compound is preferred, more preferably of organic compounds comprising at least one carbon - carbon and/or carbon - oxygen and/or carbon - nitrogen bond, more preferably of organic compounds comprising at least one carbon - carbon and/or carbon - oxygen bond, and even more preferably of organic compounds comprising at least one carbon - carbon bond. In particularly preferred embodiments of the present invention, the zeolitic material is used as a catalyst and/or catalyst support in a fluid catalytic cracking (FCC) process.

Furthermore, it is preferred according to the present invention, that the zeolitic material is used as a catalyst for producing light olefins from non-petroleum feedstock by conversion of oxygenates, such as lower alcohols (methanol, ethanol), ethers (dimethyl ether, methyl ethyl ether), esters (dimethyl carbonate, methyl formate) and the like to olefins, and especially in the conversion of lower alcohols to light olefins. According to particularly preferred embodiments, the zeolitic material of the present invention is used in the conversion of methanol to olefin (MTO)

According to a further embodiment of the present invention, the zeolitic material of the invention is preferably used in a catalytic process involving the conversion of at least one compound comprising at least one nitrogen - oxygen bond. Particularly preferred according to the present invention is the use of the zeolitic material as a catalyst and/or catalyst support in a selective catalytic reduction (SCR) process for the selective reduction of nitrogen oxides NOₓ; for the oxidation of NH₃, in particular for the oxidation of NH₃ slip in diesel systems; for the decomposition of N₂O. According to particularly preferred embodiments of the present invention, the zeolitic material used in a catalytic process involving the conversion of at least one compound comprising at least one nitrogen - oxygen bond comprises Cu and/or Fe, and more preferably Cu.

Therefore, the present application also relates to a method for selectively reducing nitrogen oxides NOₓ by contacting a stream containing NOₓ with a catalyst containing the zeolitic material according to the present invention under suitable reducing conditions; to a method of oxidizing NH₃, in particular of oxidizing NH₃ slip in diesel systems, by contacting a stream containing NH₃ with a catalyst containing the zeolitic material according to the present invention under suitable oxidizing conditions; to a method of decomposing of N₂O by contacting a stream containing N₂O with a catalyst containing the zeolitic material according to the present invention under suitable decomposition conditions; to a method of controlling emissions in Advanced Emission Systems such as Homogeneous Charge Compression Ignition (HCCl) engines by contacting an emission stream with a catalyst containing the zeolitic material according to the present invention under suitable conditions; to a fluid catalytic cracking FCC process wherein the zeolitic material according to the present invention is employed as additive; to a method of converting an organic compound by contacting said compound with a catalyst containing the zeolitic material according to the present invention under suitable conversion conditions; to a "stationary source" process wherein a catalyst is employed containing the zeolitic material according to the present invention.

Therefore, the present application also relates to a method for selectively reducing nitrogen oxides NOₓ, wherein a gaseous stream containing nitrogen oxides NOₓ, preferably also containing ammonia and/urea, is contacted with the zeolitic material according to the present invention or the zeolitic material obtainable or obtained according to the present invention, preferably in the form of a molded catalyst, still more preferably as a molded catalyst wherein the zeolitic material is deposited on a suitable refractory carrier, still more preferably on a "honeycomb" carrier.

The nitrogen oxides which are reduced using a catalyst containing the zeolitic material according to the present invention or the zeolitic material obtainable or obtained according to the present invention may be obtained by any process, e.g. as a waste gas stream. Among others, waste gas streams as obtained in processes for producing adipic acid, nitric acid, hydroxylamine derivatives, caprolactame, glyoxal, methyl-glyoxal, glyoxylic acid or in processes for burning nitrogenous materials may be mentioned.

Most preferably, the zeolitic material according to the present invention or the zeolitic material obtainable or obtained according to the present invention is used as a molded catalyst, still more preferably as a molded catalyst wherein the zeolitic material is deposited on a suitable refractory carrier, still more preferably on a "honeycomb" carrier, for the selective reduction of nitrogen oxides NOₓ, i.e. for selective catalytic reduction of nitrogen oxides. In particular, the selective reduction of nitrogen oxides wherein the zeolitic material according to the present invention is employed as catalytically active material is carried out in the presence ammonia or urea. While ammonia is the reducing agent of choice for stationary power plants, urea is the reducing agent of choice for mobile SCR systems. Typically, the SCR system is integrated in the engine and vehicle design and, also typically, contains the following main components: SCR catalyst containing the zeolitic material according to the present invention; a urea storage tank; a urea pump; a urea dosing system; a urea injector/nozzle; and a respective control unit.

Furthermore, it is preferred according to the present invention that the zeolitic material is used as a molecular trap for organic compounds. In general, any type of organic compound may be trapped in the zeolitic material, wherein it is preferred that the compound is reversibly trapped, such that it may be later released from the zeolitic material, preferably wherein the organic compound is released - preferably without conversion thereof - by an increase in temperature and/or a decrease in pressure. Furthermore, it is preferred that the zeolitic material is used to trap organic compounds of which the dimensions allow them to penetrate the microporous system of the molecular structure. According to yet further embodiments of the present invention, it is preferred that the trapped compounds are released under at least partial conversion thereof to a chemical derivative and/or to a decomposition product thereof, preferably to a thermal decomposition product thereof.

When preparing specific catalytic compositions or compositions for different purposes, it is also conceivable to blend the zeolitic material according to the present invention with at least one other catalytically active material or a material being active with respect to the intended purpose. It is also possible to blend at least two different inventive materials which may differ in their YO₂ : X₂O₃ molar ratio, and in particular in their SiO₂ : Al₂O₃ molar ratio, and/or in the presence or absence of one or more further metals such as one or more transition metals and/or in the specific amounts of a further metal such as a transition metal, wherein according to particularly preferred embodiments, the one or more transition metal comprises Cu and/or Fe, more preferably Cu. It is also possible to blend at least two different inventive materials with at least one other catalytically active material or a material being active with respect to the intended purpose.

Also, the catalyst may be disposed on a substrate. The substrate may be any of those materials typically used for preparing catalysts, and will usually comprise a ceramic or metal honeycomb structure. Any suitable substrate may be employed, such as a monolithic substrate of the type having fine, parallel gas flow passages extending there through from an inlet or an outlet face of the substrate, such that passages are open to fluid flow there through (referred to as honeycomb flow through substrates). The passages, which are essentially straight paths from their fluid inlet to their fluid outlet, are defined by walls on which the catalytic material is disposed as a washcoat so that the gases flowing through the passages contact the catalytic material. The flow passages of the monolithic substrate are thin-walled channels, which can be of any suitable cross-sectional shape and size such as trapezoidal, rectangular, square, sinusoidal, hexagonal, oval, circular, etc. Such structures may contain from about 60 to about 400 or more gas inlet openings (i.e., cells) per square inch (2.54 cm x 2.54 cm) of cross section.

The substrate can also be a wall-flow filter substrate, where the channels are alternately blocked, allowing a gaseous stream entering the channels from one direction (inlet direction), to flow through the channel walls and exit from the channels from the other direction (outlet direction). The catalyst composition can be coated on the flow through or wall-flow filter. If a wall flow substrate is utilized, the resulting system will be able to remove particulate matter along with gaseous pollutants. The wall-flow filter substrate can be made from materials commonly known in the art, such as cordierite, aluminum titanate or silicon carbide. It will be understood that the loading of the catalytic composition on a wall flow substrate will depend on substrate properties such as porosity and wall thickness, and typically will be lower than loading on a flow through substrate.

The ceramic substrate may be made of any suitable refractory material, e.g., cordierite, cordierite-alumina, silicon nitride, zircon mullite, spodumene, alumina-silica magnesia, zircon silicate, sillimanite, a magnesium silicate, zircon, petalite, alpha-alumina, an aluminosilicate, and the like.

The substrates useful for the catalysts of embodiments of the present invention may also be metallic in nature and be composed of one or more metals or metal alloys. The metallic substrates may be employed in various shapes such as corrugated sheet or monolithic form. Suitable metallic supports include the heat resistant metals and metal alloys such as titanium and stainless steel as well as other alloys in which iron is a substantial or major component. Such alloys may contain one or more of nickel, chromium and/or aluminum, and the total amount of these metals may advantageously comprise at least 15 wt. % of the alloy, e.g., 10-25 wt. % of chromium, 3-8 wt. % of aluminum and up to 20 wt. % of nickel. The alloys may also contain small or trace amounts of one or more other metals such as manganese, copper, vanadium, titanium, and the like. The surface or the metal substrates may be oxidized at high temperatures, e.g., 1000 °C and higher, to improve the resistance to corrosion of the alloys by forming an oxide layer on the surfaces of the substrates. Such high temperature-induced oxidation may enhance the adherence of the refractory metal oxide support and catalytically promoting metal components to the substrate.

In alternative embodiments, zeolitic material according to the present invention may be deposited on an open cell foam substrate. Such substrates are well known in the art, and are typically formed of refractory ceramic or metallic materials.

Especially preferred is the use of a catalyst containing the zeolitic material according to the present invention or the zeolitic material obtainable or obtained according to the present invention for removal of nitrogen oxides NOₓ from exhaust gases of internal combustion engines, in particular diesel engines, which operate at combustion conditions with air in excess of that required for stoichiometric combustion, i.e., lean.

Therefore, the present application also relates to a method for removing nitrogen oxides NOₓ from exhaust gases of internal combustion engines, in particular diesel engines, which operate at combustion conditions with air in excess of that required for stoichiometric combustion, i.e., at lean conditions, wherein a catalyst containing the zeolitic material according to the present invention or the zeolitic material obtainable or obtained according to the present invention is employed as catalytically active material.

The present invention therefore relates to the use of the zeolitic material of the invention, in particular in the field of catalysis and/or in the treatment of exhaust gas, wherein said exhaust gas treatment comprises industrial and automotive exhaust gas treatment. In these and other applications, the zeolitic material of the present invention can by way of example be used as a molecular sieve, catalyst, and/or catalyst support.

In embodiments of the present invention involving the use of the zeolitic material of the invention in exhaust gas treatment, the zeolitic material is preferably used in the treatment of industrial or automotive exhaust gas, more preferably as a molecular sieve in said applications. In a particularly preferred embodiment, the zeolitic material used in exhaust gas treatment is comprised in a hydrocarbon trap.

Therefore, the present invention further relates to the use of a zeolitic material according to the present invention, and in particular according to preferred and particularly preferred embodiments thereof as defined in the present application, as a molecular sieve, as an adsorbent, for ion-exchange, as a catalyst and/or as a catalyst support, preferably as a catalyst for the selective catalytic reduction (SCR) of nitrogen oxides NOₓ; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions, preferably in the conversion of alcohols to olefins, and more preferably in methanol to olefin (MTO) catalysis. According to the present invention it is however particular preferred that the organotemplate-free zeolitic material having a CHA-type framework structure is used as a catalyst for the selective catalytic reduction (SCR) of nitrogen oxides NOₓ.

### DESCRIPTION OF THE FIGURES

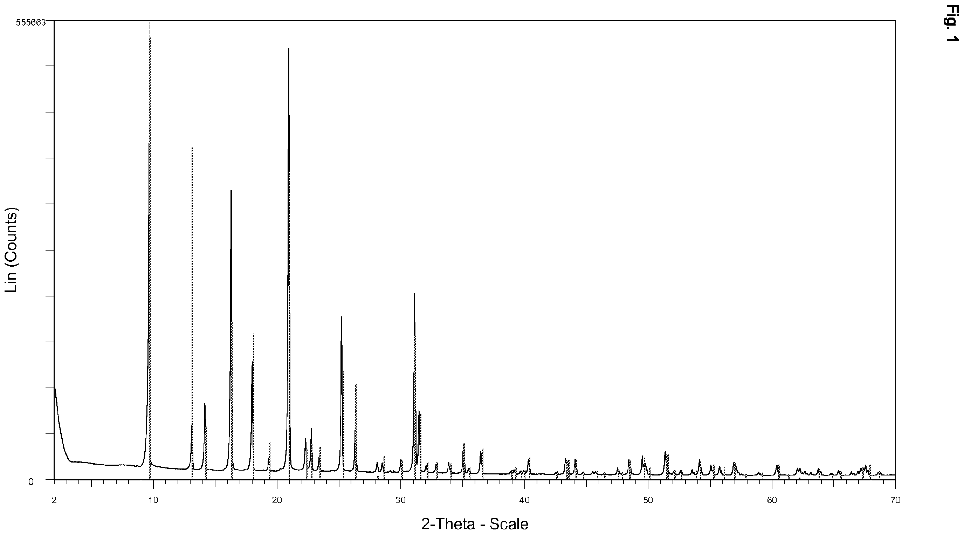

- Figures 1, 2a, 3a, 4a, and 5a: respectively show the X-ray diffraction pattern (measured using Cu K alpha-1 radiation) of the crystalline materials obtained according to Examples 1, 2, 3, 5, and 6, respectively, wherein the line pattern of the CHA-type framework has been further included in Figures Figures 1, 2a, 3a, and 4a for comparison. In the figures, the angle 2 theta in ° is shown along the abscissa and the intensities are plotted along the ordinate.

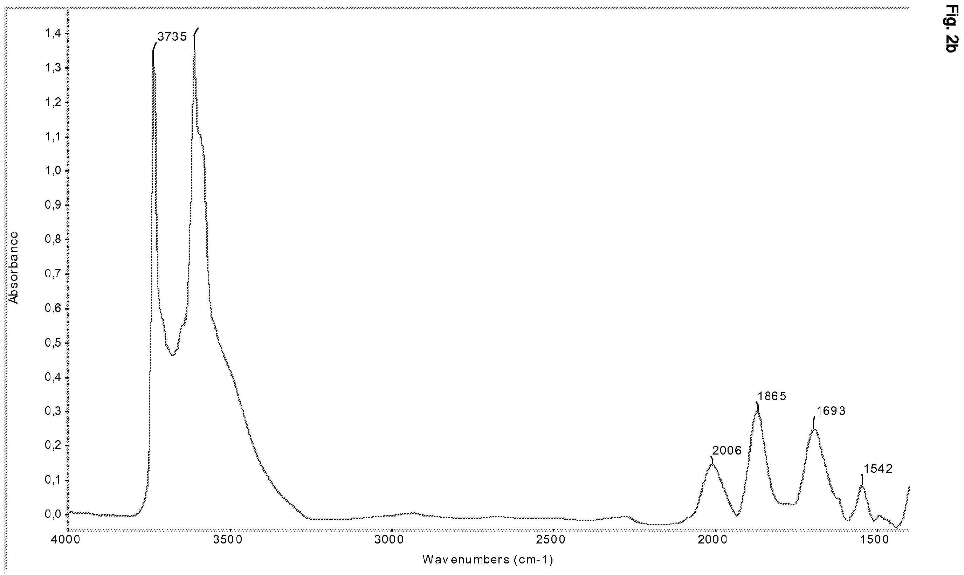

- Figures 2b, 3b, 4b, and 5b: display the IR-spectra obtained for the crystalline material obtained according to Examples 2, 3, 5, and 6, respectively. In the figures, the wavenumbers in cm⁻¹ is shown along the abscissa, and the absorbance is plotted along the ordinate.

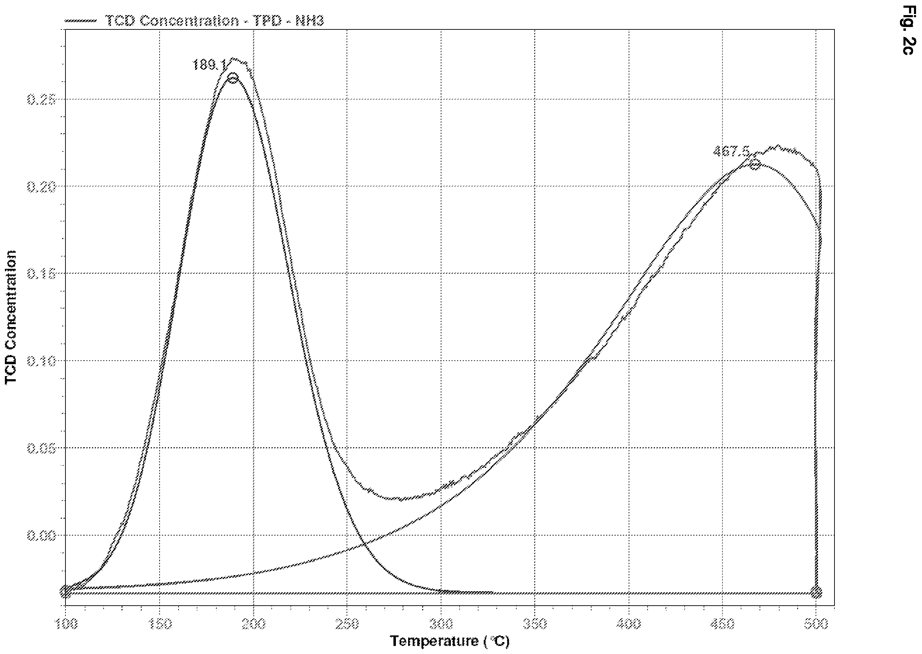

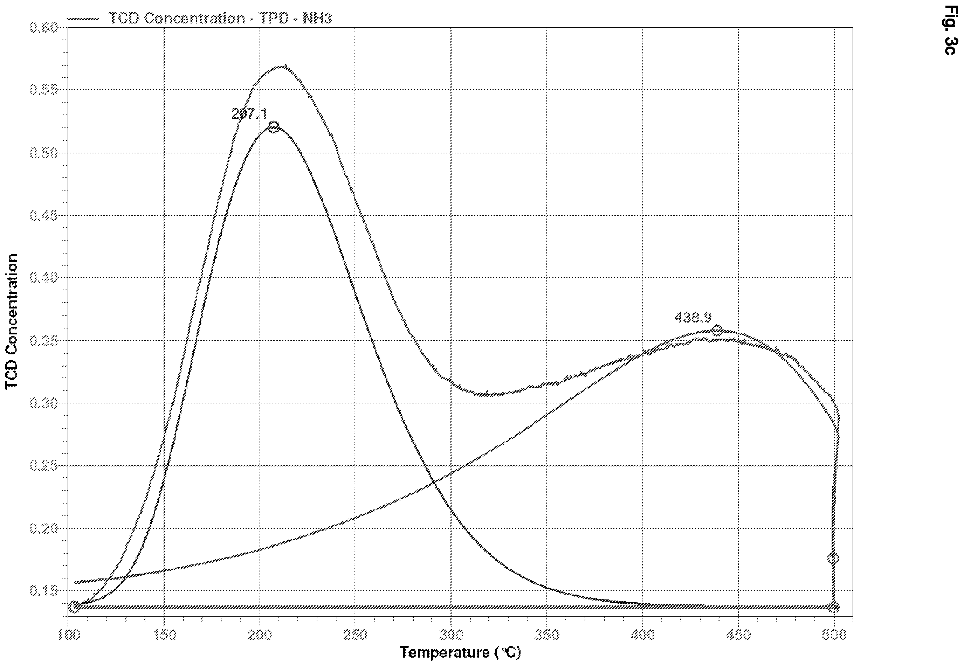

- Figures 2c and 3c: display the temperature-programmed desorption (NH₃-TPD) obtained for the crystalline material obtained according to Examples 2 and 3, respectively. In the figures, the temperature in °C is shown along the abscissa, and the concentration of desorbed ammonia as measured by the thermal conductivity detector (TCD) is plotted along the ordinate.

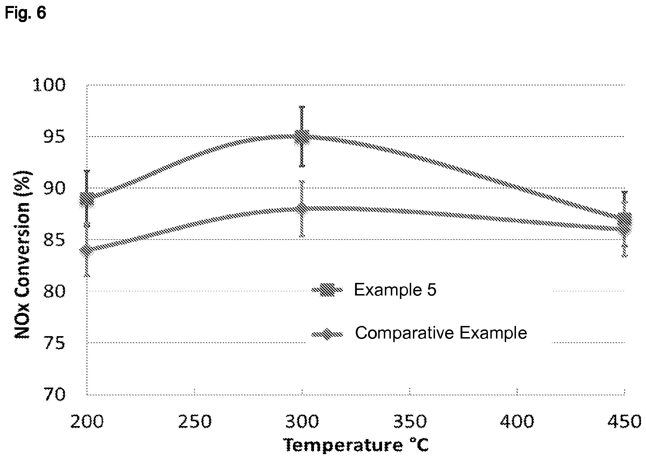

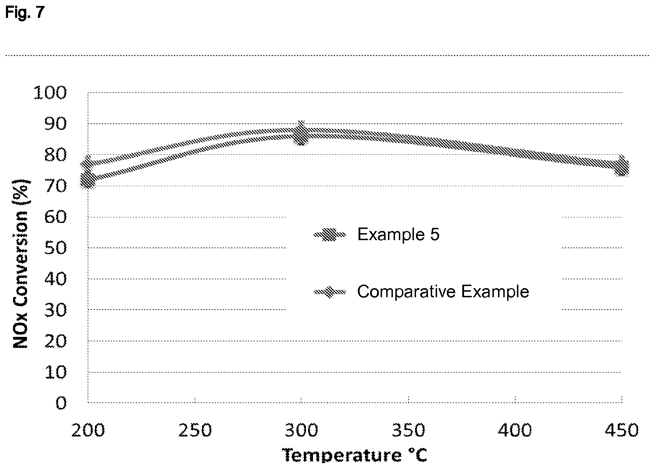

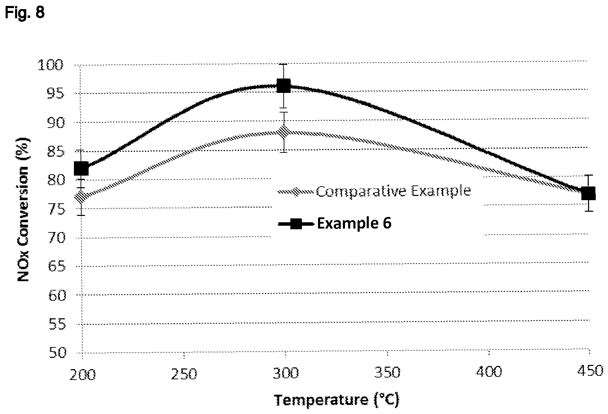

- Figures 6, 7, and 8: display results from catalyst testing in NOₓ conversion performed on the copper-exchanged zeolitic material according to Examples 5 and 6, respectively, after forming to a shaped body compared to the comparative example described in Example 7. In Figures 7 and 8, the results are shown using samples subject to an aging treatment as described in Example 7. In the figures, the temperature in °C is shown along the abscissa, and the NOₓ conversion rate in % is plotted along the ordinate.

### EXAMPLES

X-ray diffraction experiments on the powdered materials were performed using an Advance D8 Series 2 Diffractometer (Bruker/AXS) equipped with a Sol-X detector using the Cu K alpha-1 radiation.

²⁷Al MAS solid-state NMR experiments were measured by direct excitation with 15°-pulse under 10 kHz Magic Angle Spinning using 250 ms recycle delay and 20 ms acquisition. The data was processed with 50 Hz exponential line broadening.

The IR-spectra were obtained from samples free of a carrier material, wherein said sample were heated at 300°C in high vacuum for 3 h prior to measurement. The measurements were performed using a Nicolet 6700 spectrometer in a high vacuum measurement cell with CaF₂ windows. The obtained data was transformed to absorbance values, and the analysis was performed on the spectra after base line correction.

### Reference Example 1

47.8 g of a 50% aqueous solution of trimethylcyclohexylammonium hydroxide (TMCAOH) were mixed with 4.02 g of Al₂(SO₄)₃*18 H₂O and 15.08 ml 1M NaOH in H₂O. Afterwards 18.1 g of fumed silica (Aerosil 200) were added stepwise to the stirred mixture. The resulting gel was placed in a sealed autoclave with a total volume of 0.25 L which was then heated to 150°C for 96 h. After cooling down to room temperature, the obtained product was separated by centrifugation and washed four times with 100ml H₂O, respectively. Afterwards, the material was dried for 10h under air at 120°C, resulting in 12.6 g of a white powder. The powder was then calcined under air by heating it up with a rate of 1°C/min to 550°C and held at that temperature for 5h.

The XRD-pattern of the product is displayed in Figure 1 and reveals a zeolitic material having the CHA-type structure as the single crystalline phase. From the N₂- and Ar-sorption measurements the surface area (BET) was determined with 642m²/g, and the maximum pore volume (Horvath-Kawazoe) is calculated to 0.27 cm³/g and median pore width to 0.62 nm. The elemental analysis reveals a composition of 2.4 wt.-% Al, 28 wt.-% Si and 0.64 wt.-% Na.

### Reference Example 2

755.2 g trimethylcyclohexylammonium hydroxide (55.8 wt.-% in H₂O) were mixed with 70.53 g Al₂(SO₄)₃*18 H₂O and 264.56 ml 1M NaOH in H₂O. Afterwards 317.55 g of fumed silica (Aerosil 200) were added stepwise to the stirred mixture. The resulting gel was placed in a sealed autoclave with a total volume of 2.5 L and heated to 120°C for 96h. After cooling down to room temperature, the obtained product was separated by centrifugation and washed four times with 800 ml H₂O, respectively. Afterwards, the material was dried for 10h under air at 120°C, resulting in 122 g of a white powder. The powder was then calcined under air by heating it up with a rate of 1K/min to 550°C and holding it at that temperature for 5 h.

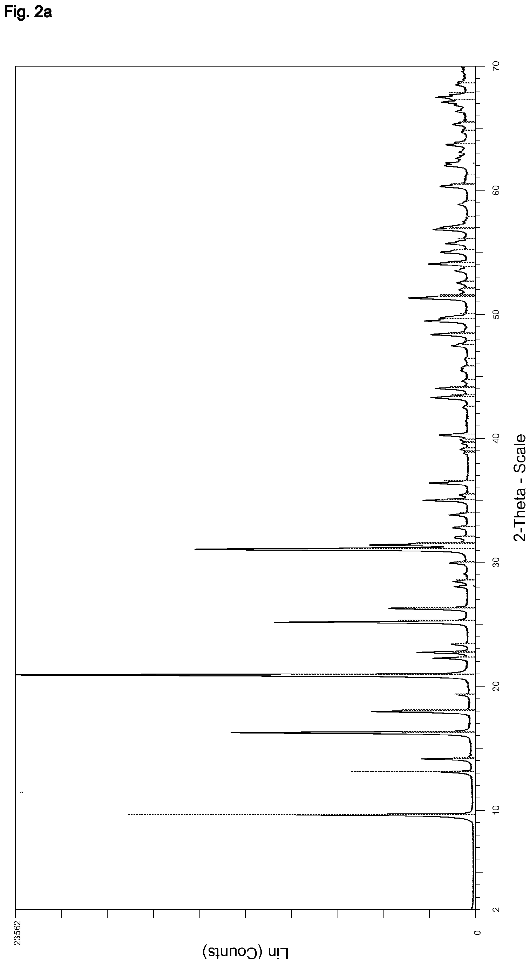

The XRD-pattern of the product is displayed in Figure 2a and reveals a zeolitic material having the CHA-type structure as the single crystalline phase.

The sample was then converted to the H-form via an ion-exchange procedure, thus affording a final product having a composition of 2.5 wt-% Al, 38.0 wt-% Si and <0.01 wt-% Na. Accordingly, the Si : Al ratio of the final product in its H-form was 15.2. The sample displayed a crystallinity of 80% and displayed an average crystal size of 170 nm.

The ²⁷Al MAS NMR spectrum of the sample displayed a first peak at 56.2 ppm and a second peak at -2.8 ppm wherein integration of the first and second signal intensities revealed a ratio of the integration values first: second signal of 1 : 0.12.

The IR-spectrum of the product obtained from Example 2 is shown in Figure 2b, wherein amongst others absorption bands having maxima at 3,609 cm⁻¹ and 1,865 cm⁻¹ may be seen having maximum absorbance values of 1.33 and 0.33, respectively. The maximum absorbance at 3,609 cm⁻¹ is tentatively attributed to Bronsted acid Si-OH sites.

NH₃-TPD was performed on the sample of Example 2, the result of which is displayed in Figure 2c. Analysis of the data affords a concentration of 0.35 mmol/g of weak acid sites and a concentration of 0.68 mmol/g of strong acid sites, thus affording a total H⁺-concentration of 1.03 mmol/g. This contrasts with the NH₃-TPD which was performed using a Chabazite of the prior art obtained according to US 2003/0069449 A1 which afforded a concentration of 0.19 mmol/g of weak acid sites and 0.43 mmol/g of strong acid sites for a total H⁺-concentration of 0.62 mmol/g.

### Reference Example 3

47.8 g of trimethylcyclohexylammonium hydroxide (66.8wt-% in H₂O) were mixed with 4.02 g Al₂(SO₄)₃*18 H₂O and 0.6 g of NaOH. Afterwards 45.25 g of colloidal silica (LUDOX AS40; colloidal SiO₂ 40wt-% in H₂O) were added to the stirred mixture. The resulting gel was placed in a sealed autoclave with a total volume of 0.25 L which was then heated to 170°C for 96 h. After cooling down to room temperature, the obtained product was separated by filtration and washed three times with 400 ml of distilled water. Afterwards, the material was dried for 10h under air at 120°C, affording 17.6 g of white powder. The powder was then calcined under air by heating it up at a rate of 1°C/min to 550°C, and holding it at that temperature for 5h.

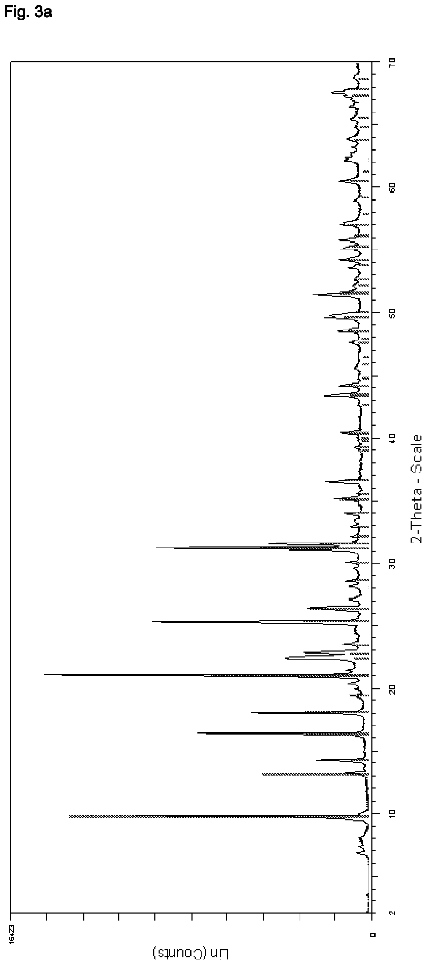

The XRD-pattern of the product is displayed in Figure 3a and reveals a zeolitic material having the CHA-type structure as the single crystalline phase. The elemental analysis of the product revealed a composition of 1.8 wt.-% Al, 35.5 wt.-% Si and 0.36 wt.-% Na.

The sample was then converted to the H-form via an ion-exchange procedure, thus affording a final product having a composition of 1.9 wt.-% Al, 43.0 wt.-% Si and <0.01 wt.-% Na. Accordingly, the Si : Al ratio of the final product in its H-form was 22.6. The sample displayed a crystallinity of 90% and displayed an average crystal size of >100 nm.

The ²⁷Al MAS NMR spectrum of the product obtained from Example 3 displayed a first peak at 54.1 ppm and a second peak at -3.4 ppm wherein integration of the first and second signal intensities revealed a ratio of the integration values first: second signal of 1 : 0.11.

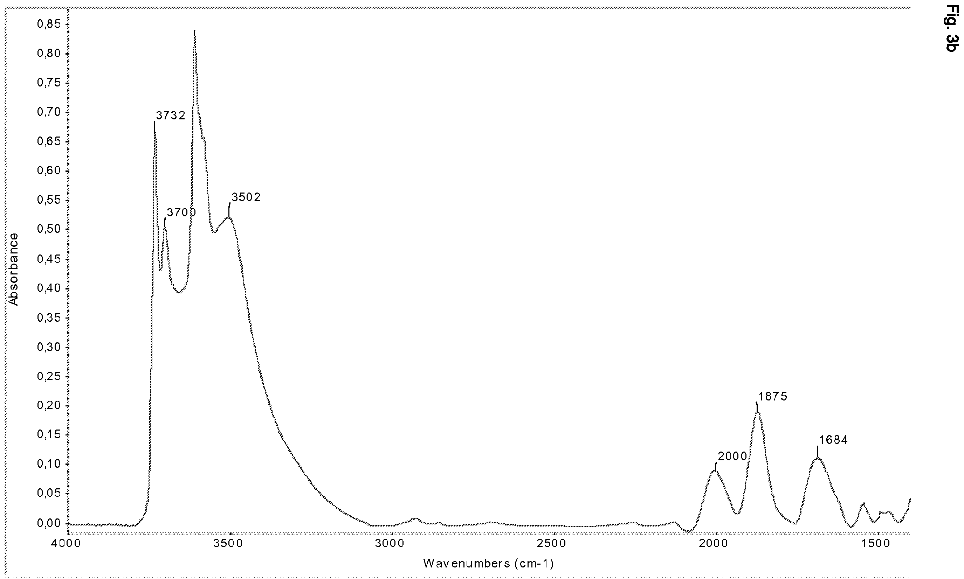

The IR-spectrum of the sample is shown in Figure 3b, wherein amongst others absorption bands having maxima at 3,700 cm⁻¹, 3,609 cm⁻¹, 3,502 cm⁻¹, and 1,875 cm⁻¹ may be seen having maximum absorbance values of 0.51, 0.83, 0.53, and 0.20, respectively. As for the IR-spectrum of Example 2, he maximum absorbance at 3,609 cm⁻¹ is again tentatively attributed to Bronsted acid Si-OH sites. Furthermore, the absorption bands at 3,700 cm⁻¹ and 3,502 cm⁻¹ are attributed to terminal Si-OH and silanol nests, respectively.

NH₃-TPD was performed on the sample of Example 3, the result of which is displayed in Figure 3c. Analysis of the data affords a concentration of 0.45 mmol/g of weak acid sites and a concentration of 0.54 mmol/g of strong acid sites, thus affording a total H⁺-concentration of 0.99 mmol/g. This again contrasts with the NH₃-TPD which was performed using a Chabazite of the prior art obtained according to US 2003/0069449 A1 which afforded the values indicated in Example 2. Thus, as discussed above for Example 2, compared to sample from the prior art it has quite surprisingly been found that a higher concentration of both weak and strong acid sites are observed for the inventive material of the present example. In the present case, this is all the more surprising considering the fact that the inventive sample displays a significantly higher Si : Al ratio of 22.6 than the sample of the prior art, which displays an Si : Al ratio of merely 17.1.

### Comparative example 4

0.444 g Al₂(SO₄)₃*18 H₂O and 5.28 g of trimethylcyclohexylammonium hydroxide (50 wt% in H₂O) were stirred for about 30 minutes. Afterwards, 4 g of colloidal silica (Ludox TM-50; 50 wt% SiO₂) were added and the mixture stirred for 2 hours to result in a white, pourable precursor solution. The precursor solution was then filled into a 20 ml teflon-lined autoclave and reacted for three days at 150°C in a preheated oven. After cooling down to room temperature, the obtained product was separated by centrifugation and washed four times with 100 ml H₂O, respectively. Afterwards, the material was dried for 10 h under air at 120°C, resulting in 2.0 g of a white powder.

The XRD-pattern of the product revealed a zeolitic material having the CHA-type structure as the single crystalline phase.

### Example 5: Preparation with Seeding Material from Example 2

47.8 g trimethylcyclohexylammonium hydroxide (19.9 wt.-% in H₂O) were mixed with 4.02 g Al₂(SO₄)₃*18 H₂O and 15.08 ml 1 M NaOH. Afterwards 45.25 g of colloidal silica (LUDOX AS40; 40 wt.-% colloidal SiO₂ in H₂O) were added to the stirred mixture. Finally 0.36 g of the product from Example 2 was dispersed in the reaction mixture. The resulting gel was placed in a sealed autoclave with a total volume of 0.25 L which was then heated to 170°C for 144 h. After cooling down to room temperature, the obtained product was separated by filtration and was washed three times with 400 ml distilled H₂O. Afterwards, the material is dried for 10 h under air at 120°C, affording 22.3 g of a white crystalline powder. The powder was then calcined under air by heating it up with a rate of 1°C/min to 550°C and holding it at that temperature for 5h.

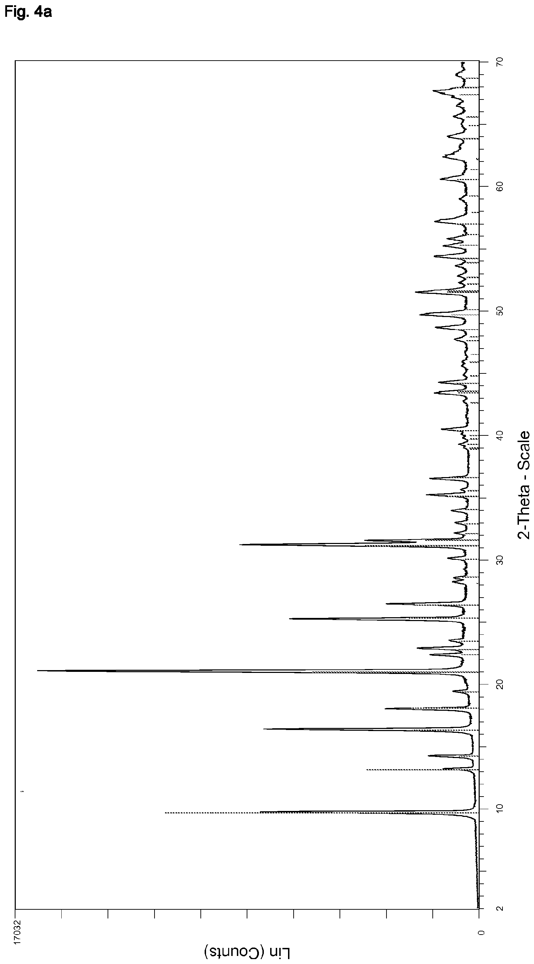

The XRD-pattern of the product is displayed in Figure 4a and reveals a zeolitic material having the CHA-type structure as the single crystalline phase.

The sample was then converted to the H-form via an ion-exchange procedure, thus affording a final product with a composition of 1.7 wt-% Al, 41.5 wt-% Si and <0.01 wt-% Na as determined by elemental analysis. Accordingly, the Si : Al ratio of the final product in its H-form was 24.4. The sample displayed a crystallinity of 87% and displayed an average crystal size of >100 nm.

The ²⁷Al MAS NMR spectrum of the product obtained from Example 5 displayed a first peak at 56.0 ppm and a second peak at -3.4 ppm wherein integration of the first and second signal intensities revealed a ratio of the integration values first: second signal of 1 : 0.027.

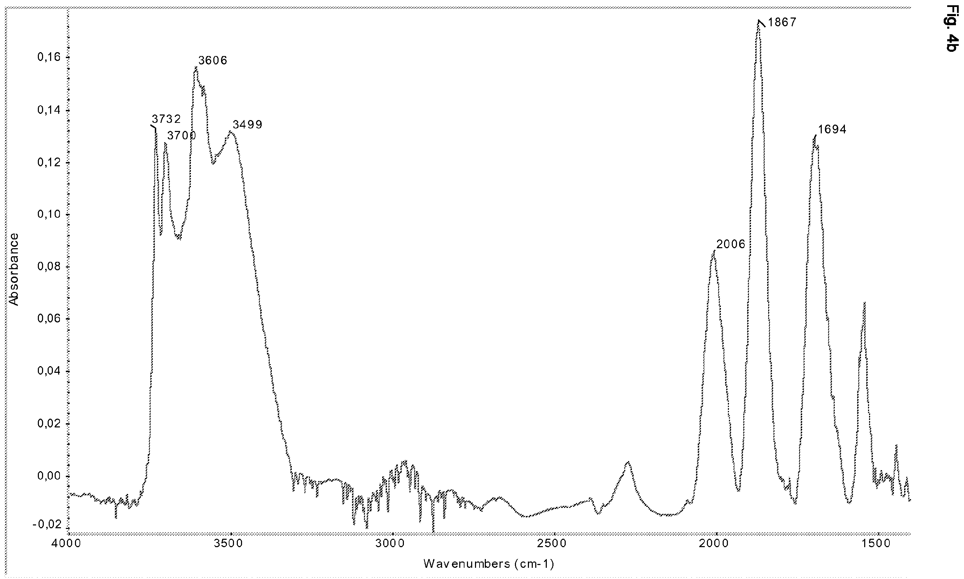

The IR-spectrum of the sample is shown in Figure 4b, wherein amongst others absorption bands having maxima at 3,700 cm⁻¹, 3,606 cm⁻¹, 3,499 cm⁻¹, and 1,867 cm⁻¹ may be seen having maximum absorbance values of 0.41, 0.17, 0.14, and 0.19, respectively. As for the IR-spectrum of Examples 2 and 3, the maximum absorbance at 3,606 cm⁻¹ is again tentatively attributed to Bronsted acid Si-OH sites. Furthermore, as for Example 3, the absorption bands at 3,700 cm⁻¹ and 3,499 cm⁻¹ are attributed to terminal Si-OH and silanol nests, respectively.

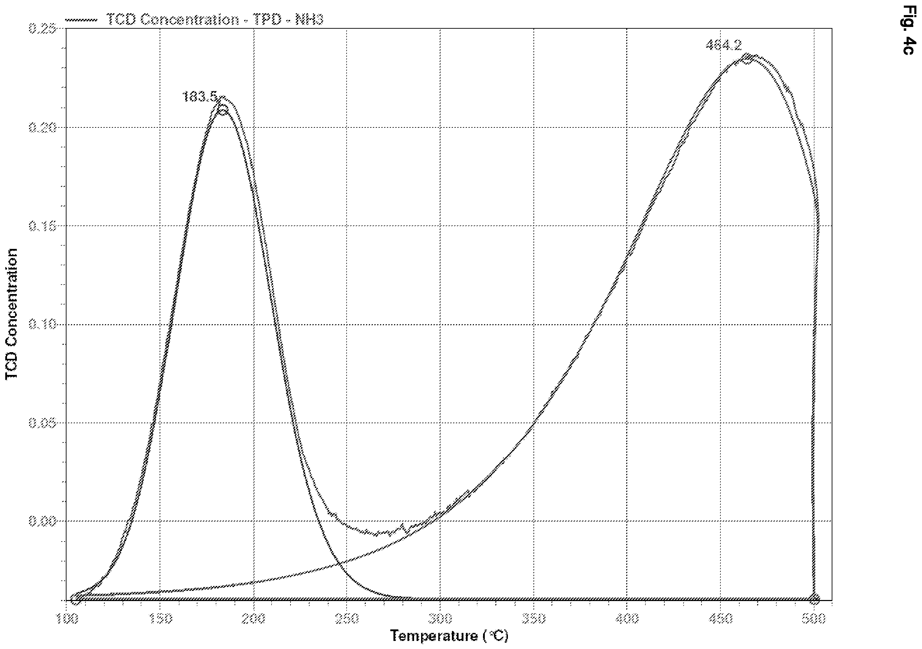

NH₃-TPD was performed on the sample of Example 5, the result of which is displayed in Figure 4c. Analysis of the data affords a concentration of 0.22 mmol/g of weak acid sites and a concentration of 0.55 mmol/g of strong acid sites, thus affording a total H⁺-concentration of 0.77 mmol/g. This again contrasts with the NH₃-TPD which was performed using a Chabazite of the prior art obtained according to US 2003/0069449 A1 which afforded the values indicated in Example 2. Furthermore, as discussed above for Example 3, these results are highly unexpected considering the fact that the inventive sample displays a significantly higher Si : Al ratio of 24.4 than the sample of the prior art.

36.16 g of the zeolitic material obtained from Example 5 were dispersed in 361.0 g ammonium nitrate solution (10wt-%) in H₂O and heated under stirring to 60°C for 2 h. Afterwards, the solid was filtered and washed with H₂O to remove residual nitrate ions. The ion exchange step was then repeated one more time. Finally, the resulting zeolitic material was dried under air at 120°C for 10 h. The elemental analysis revealed a decreased sodium content (0.3 wt-%) in the sample.

31.2 g of the powder obtained from ion-exchange was then dispersed in a mixture of 393.7 g H₂O, 50 g ethanol and 4.01 g copper(II)acetate and heated under stirring to 60°C for 1 h. The resulting light blue Cu-CHA was separated from the solution by filtration and was washed four times with 300 ml H₂O, respectively. The product was characterized by elemental analysis, indicating the successful incorporation of Cu ions (3.0 wt-%) and the further removal of residual sodium ions to 0.01wt-% in the prepared material.

The copper-exchange zeolitic material was then formed to a shaped body by mixing 30 g thereof with 1.5 g polyethylenoxide and 11 ml H₂O in a kneader. The resulting paste was pressed through an extruding hole of 1.5 mm with a maximum pressure of 10 bar. The obtained extrudates were dried at 120°C for 5 h and calcined at 540°C for 5 h. The extrudate was then sized into pellets and sieved to separate pellet sizes of 0.5 - 1mm. This fraction was then used for testing in the reactor. The resulting light blue extrudates were analyzed by N₂-sorption measurements at 77K. Based on the obtained isotherm, the surface area was calculated by BET to 632m²/g.

### Example 6: Preparation with Na-Chabazite as seeding material

291.3 g trimethylcyclohexylammonium hydroxide (35.0 wt-% in H₂O) were mixed with 42.88g Al₂(SO₄)₃*18 H₂O and 160.84 ml 1 M NaOH. Afterwards, 482.62 g colloidal silica (LUDOX AS40; 40wt-% colloidal SiO₂ in H₂O) were added to the stirred mixture. Finally, 3.83g of Chabazite (Na-form; Si : Al molar ratio = 15) were dispersed in the reaction mixture. The resulting gel was placed in a sealed autoclave with a total volume of 2.5 L which was then heated to 170°C for 48h. After cooling down to room temperature, the obtained product was separated by filtration and was washed three times with 2000 ml distilled H₂O. Afterwards, the material was dried for 10h under air at 120°C, affording 245.5 g of a white crystalline powder. The powder was then calcined under air by heating it up with a rate of 1°C/min to 550°C and holding it at that temperature for 5h.

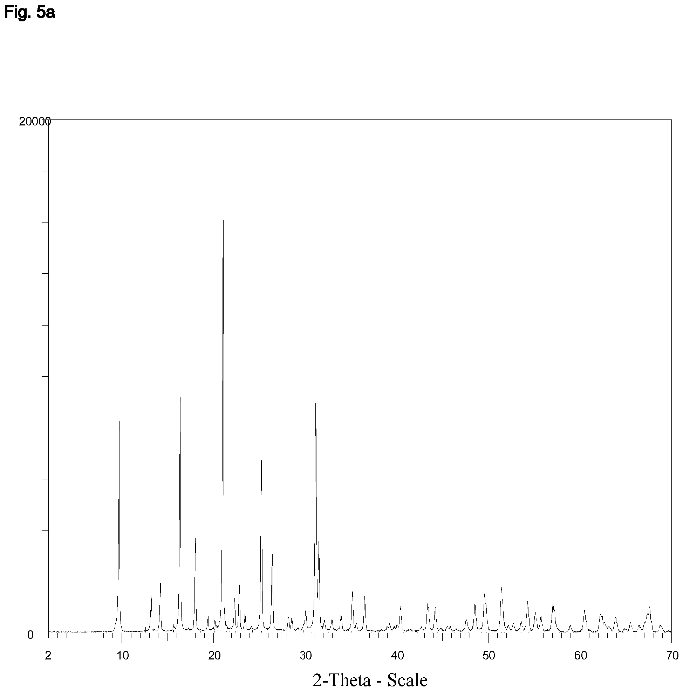

The XRD-pattern of the product is displayed in Figure 5a and reveals a zeolitic material having the CHA-type structure as the single crystalline phase.

Elemental analysis of the product revealed a composition of 1.6 wt-% Al, 37.5 wt-% Si and 0.10 wt-% Na. Accordingly, the Si : Al molar ratio of the final product was 22.6.

The ²⁷Al MAS NMR spectrum of the product obtained from Example 6 displayed a single peak at 57.6 ppm. Thus, it is apparent from the NMR spectrum of the product that no extra-framework aluminum is contained therein, the single peak observed standing for tetra-valently coordinated aluminum contained in the framework structure of the zeolite.

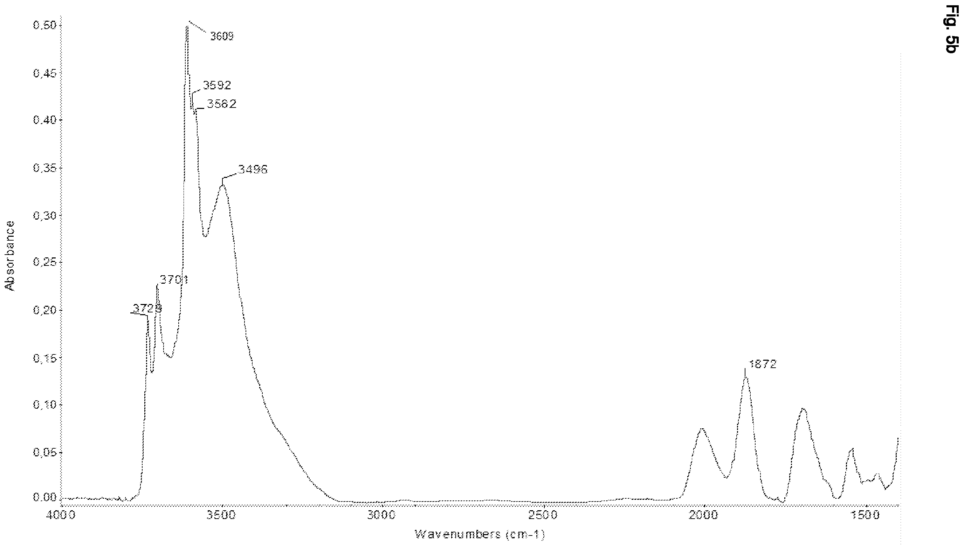

The IR-spectrum of the sample is shown in Figure 5b, wherein amongst others absorption bands having maxima at 3,701 cm⁻¹, 3,609 cm⁻¹, 3,496 cm⁻¹, and 1,872 cm⁻¹ may be seen. As for the IR-spectrum of Examples 2, 3, and 5, the maximum absorbance at 3,609 cm⁻¹ is again tentatively attributed to Bronsted acid Si-OH sites. Furthermore, as for Example 3, the absorption bands at 3,701 cm⁻¹ and 3,496 cm⁻¹ are attributed to terminal Si-OH and silanol nests, respectively.

The zeolite product was then converted into the H-from and subsequently ion-exchanged as described in Example 5. Elemental analysis of the product revealed a composition of 1.6 wt-% Al, 2.5 wt-% Al, 37.5 wt-% Si and 0.01 wt-% Na. Accordingly, the Si : Al molar ratio of the ion-exchanged product remains unchanged compared to the sodium form directly obtained from hydrothermal synthesis. The material was also analyzed by N₂-sorption measurements at 77K. Based on the obtained isotherm, the surface area was calculated by BET to 490 m²/g, and the Langmuir surface area to 653 m²/g.

For catalyst testing in Example 7 below, a shaped body was formed using the copper-exchanged material according to the procedure described in Example 5.

### Example 7: Catalyst Testing

The steps for obtaining the copper-exchange zeolite containing extrudates as described in Example 5 were respectively repeated using a Chabazite of the prior art obtained according to US 2003/0069449 A1 for obtaining the comparative example (2.9 wt.-% of Cu ions exchanged).

Respective extrudates from Example 5 and according to the comparative example were then aged in a reactor composed of a 1mm thick steel tube (grade 1.4841 from Buhlmann Group) with diameters of 500 mm height and 18 mm internal diameter. A nickel mantle based furnace was used to heat the reactor to the target reaction temperature which was monitored by an internal thermocouple at the location of the sample. The steam was prepared by heating controlled amounts of water at 150°C through a steel pre-steamer before mixing with the remaining gases in a static mixer. The gases together with the steam were then passed through a pre-heater to enable the target temperature. Hydrothermal aging was achieved in the aging reactor with a gas flow containing 10 percent H₂O, 10 percent O₂, balance N₂ at a space velocity of 12,500 h-1 for 6h at 850°C, which constitutes a severe hydrothermal aging.

The SCR-test were then performed by contacting the respective samples with a gas stream containing 500 ppm NO, 500 ppm NH₃, 5% H₂O, 10% O₂, and balance N₂ at 200°C, 300°C, and 450°C, respectively. The gas hourly space velocity employed in catalyst testing was GHSV = 80,000 h⁻¹.

Results from the catalyst testing of the extrudate samples from Example 5 and from the comparative example are shown in Figures 6 and 7, respectively, showing the NOₓ conversion of the respective extrudates prior to and after aging. Thus, as may be taken from Figure 6 displaying the results employing the fresh catalysts, it has quite surprisingly been found that the copper-exchange zeolitic material of Example 5 according to the present invention affords a considerably higher conversion rate for the treatment of NOₓ reaching 95% compared to the copper-exchanged zeolitic material of the prior art which remains inferior to 90% under the same conditions. This is all the more surprising considering the fact that, as discussed in Example 5, the zeolitic material of the inventive sample displays a significantly higher Si : Al ratio of 24.4 compared to the sample of the prior art having an Si : Al ratio of 17.7.

As may be taken from the results obtained after severe aging of the respective samples, the activity of the inventive zeolitic material gradually alters over time to achieve a conversion rate comparable to that of the zeolitic material according to the prior art in the extrudates of the comparative example.

In further testing experiments, respective extrudates from Example 6 and according to the comparative example were aged in air containing 10% H₂O for 6h at 850°C, which again constitutes a severe hydrothermal aging. The aged samples were then subject to SCR-testing under the conditions outlined in the foregoing.

Results from the catalyst testing performed on the extrudate samples from Example 6 and from the comparative example aged in this manner are shown in Figure 8. Thus, compared to the testing results performed on the catalyst samples from Example 5 and the comparative example displayed in Figure 7, it may be taken from the results displayed in Figure 8 that upon aging of the respective samples in air, i.e. in an atmosphere containing about twice the amount of oxygen compared to the testing of Example 5, the improvements achieved by the catalyst according to the present invention are even more pronounced. In particular, it is observed that the even after aging of the catalyst samples, the copper-exchanged catalyst obtained according to the present invention shows a clearly superior performance in the treatment of NOₓ, even reaching a conversion rate of about 96% when conducted at 300°C. Again, as noted above relative to the comparative testing performed using the extrudate sample from Example 5, this result is very unexpected since, as shown in Example 6, the zeolitic material displays an Si : Al molar ratio of 22.6 and therefore far less reactive aluminum sites compared to the comparative sample obtained according to the prior art.

Accordingly, given the superior performance of the inventive materials both prior to and after aging as demonstrated in the foregoing, the overall conversion is considerably improved when employing the inventive catalyst, such that a highly improved catalyst may provided by the present invention compared to the zeolitic materials known from the prior art.

### Cited Prior Art Documents

- US 4,544,538
- WO-A-2008/083048
- WO-A-2008/039742
- WO-A-2008/033229
- US 4,610,854
- US-A-2007/0043249

## Claims

1. A process for the preparation of a zeolitic material having a CHA-type framework structure comprising YO₂ and X₂O₃, wherein said process comprises the steps of:
(1) providing a mixture comprising one or more sources for YO₂, one or more sources for X₂O₃, and one or more N,N,N-trimethyl-cyclohexylammonium compounds as structure directing agent;
(2) crystallizing the mixture obtained in step (1) for obtaining a zeolitic material having a CHA-type framework structure;
wherein Y is Si and X is Al,
wherein the mixture provided in step (1) comprises seed crystals, wherein the seed crystals comprise one or more zeolitic material having a CHA-type framework structure, and
wherein the mixture provided in step (1) contains 5 wt.-% or less of P₂O₅ contained in a source for P₂O₅ based on 100 wt.-% of SiO₂ contained in the one or more sources for SiO₂.

2. The process of claim 1, wherein the one or more N,N,N-trimethyl-cyclohexylammonium compounds are salts.

3. The process of claim 1 or 2, wherein the one or more sources for SiO₂ comprises one or more compounds selected from the group consisting of fumed silica, silica hydrosols, reactive amorphous solid silicas, silica gel, silicic acid, water glass, sodium metasilicate hydrate, sesquisilicate, disilicate, colloidal silica, silicic acid esters, and mixtures of two or more thereof.

4. The process of any of claims 1 to 3, wherein the one or more sources for Al₂O₃ comprises one or more compounds selected from the group consisting of alumina, aluminates, aluminum salts, and mixtures of two or more thereof.

5. The process of any of claims 1 to 4, wherein the SiO₂ : Al₂O₃ molar ratio of the mixture according to step (1) ranges from 0.5 to 500.

6. The process of any of claims 1 to 5, wherein the mixture according to step (1) further comprises one or more solvents.

7. The process of any of claims 1 to 6, wherein the H₂O : SiO₂ molar ratio of the mixture according to step (1) ranges from 3 to 50.

8. The process of any of claims 1 to 7, wherein the molar ratio of the one or more N,N,N-trimethyl-cyclohexylammonium cations : SiO₂ in the mixture provide according to step (1) ranges from 0.05 to 3.

9. The process of any of claims 1 to 8, wherein the mixture provided in step (1) contains 3 wt.-% or less of one or more metals M based on 100 wt-% of SiO₂, wherein M stands for sodium or potassium.

10. The process of any of claims 1 to 9, wherein the mixture according to step (1) further comprises one or more sources of one or more elements suitable for isomorphous substitution of at least a portion of the Si atoms and/or of the Al atoms in the CHA-type framework structure.

11. The process of any of claims 1 to 10, wherein the molar ratio of SiO₂ to the one or more elements suitable for isomorphous substitution ranges from 5 to 200.

12. The process of any of claims 1 to 11, wherein the crystallization in step (2) involves heating of the mixture.

13. The process of any of claims 1 to 12, wherein the crystallization in step (2) is conducted under solvothermal conditions.

14. The process of any of claims 1 to 13, wherein the crystallization in step (2) involves heating of the mixture for a period ranging from 0.5 to 50 d.

15. The process of any of claims 1 to 14, wherein the crystallization in step (2) involves agitating the mixture.

16. The process of any of claims 1 to 15 further comprising one or more of the following steps of
(3) isolating the zeolitic material,
and/or
(4) washing the zeolitic material,
and/or
(5) drying the zeolitic material,
and/or
(6) subjecting the zeolitic material to an ion-exchange procedure,
wherein the steps (3) and/or (4) and/or (5) and/or (6) can be conducted in any order.

17. The process of claim 16, wherein in the at least one step (6) one or more ionic non-framework elements contained in the zeolite framework is ion-exchanged.

18. The process of claim 17, wherein the amount of seed crystals in the mixture according to step (1) ranges from 0.1 to 20 wt.-% based on 100 wt.-% of SiO₂ in the at least one source for SiO₂.

19. The process of any of claims 1 to 18, wherein the mixture provided in step (1) contains 0.1 wt.-% or less of a trimethyl benzyl ammonium containing compound.

20. A synthetic zeolitic material having a CHA-type framework structure comprising YO₂ and X₂O₃,
wherein Y is Si and X is Al,
said material having an X-ray diffraction pattern comprising at least the following reflections:
| Diffraction angle 2θ/° [Cu K(alpha 1)] | Intensity (%) |
|---|---|
| 9.44 - 9.88 | 29 - 92 |
| 16.03 - 16.55 | 32 - 79 |
| 17.81 - 18.13 | 12-42 |
| 20.62 - 21.30 | 100 |
| 25.02 - 25.42 | 25 - 70 |
| 30.83 - 31.43 | 39-73 |
wherein 100% relates to the intensity of the maximum peak in the X-ray powder diffraction pattern, and
wherein the IR-spectrum of the zeolitic material comprises:
a first absorption band (B'1) in the range of from 3,550 to 3,660 cm⁻¹;
a second absorption band (B'2) in the range of from 3,450 to 3,545 cm⁻¹;
a third absorption band (B'3) in the range of from 1,800 to 1,930 cm⁻¹;
wherein the ratio of the maximum absorbance of the first absorption band to the third absorption band B'1 : B'3 is comprised in the range of from 0.30 to 2.5; and
wherein the ratio of the maximum absorbance of the second absorption band to the third absorption band B'2 : B'3 is comprised in the range of from 0.1 to 3.0.

21. The zeolitic material of claim 20, wherein the ²⁷Al MAS NMR of the untreated zeolitic material as-synthesized comprises:
a first peak (P1) in the range of from 52.3 to 58.6 ppm; and
a second peak (P2) in the range of from -2.3 to -4.1 ppm; wherein the integration of the first and second peaks in the ²⁷Al MAS NMR of the zeolitic material offers a ratio of the integration values P1 : P2 comprised in the range of from 1 : (0 - 0.22).

22. The zeolitic material of claim 20 or 21, wherein the CHA-type framework contains 5 wt.-% or less of P and/or As based on 100 wt.-% of YO₂ contained in the framework structure.

23. The zeolitic material of any of claims 20 to 22, wherein the SiO₂ : Al₂O₃ molar ratio ranges from 2 to 200.

24. The zeolitic material of any of claims 20 to 23, wherein the zeolitic material comprises one or more zeolites selected from the group consisting of (Ni(deta)₂)-UT-6, Chabazite, |Li-Na| [Al-Si-O]-CHA, DAF-5, Dehyd. Na-Chabazite, K-Chabazite, LZ-218, Linde D, Linde R, Phi, SSZ-62, UiO-21, Willhendersonite, ZK-14, ZYT-6, and combinations of two or more thereof.

25. The zeolitic material of any of claims 20 to 24, wherein the BET surface area of the zeolitic material determined according to DIN 66135 ranges from 100 to 850 m²/g.

26. Use of a synthetic zeolitic material having a CHA-type framework structure according to claim 20 to 25 as a molecular sieve, as an adsorbent, for ion-exchange, as a catalyst and/or as a catalyst support.

## Patentansprüche

1. Verfahren zur Herstellung eines zeolithischen Materials mit einer Gerüststruktur vom CHA-Typ, die YO₂ und X₂O₃ umfasst, bei dem man:
(1) eine Mischung bereitstellt, die eine oder mehrere Quellen für YO₂, eine oder mehrere Quellen für X₂O₃ und eine oder mehrere N,N,N-Trimethylcyclo-hexylammoniumverbindungen als strukturdirigierendes Mittel umfasst;
(2) die in (1) erhaltene Mischung kristallisiert, wobei man ein zeolithisches Material mit einer Gerüststruktur vom CHA-Typ erhält;
wobei Y für Si steht und X für Al steht,
wobei die in Schritt (1) bereitgestellte Mischung Impfkristalle umfasst, wobei die Impfkristalle ein oder mehrere zeolithische Materialien mit einer Gerüststruktur vom CHA-Typ umfassen, und
wobei die in Schritt (1) bereitgestellte Mischung 5 Gew.-% oder weniger in einer Quelle für P₂O₅ enthaltenes P₂O₅, bezogen auf 100 Gew.-% in der einen bzw. den mehreren Quellen für SiO₂ enthaltenes SiO₂, umfasst.

2. Verfahren nach Anspruch 1, bei dem es sich bei der einen oder den mehreren N,N,N-Trimethylcyclo-hexylammoniumverbindungen um Salze handelt.

3. Verfahren nach Anspruch 1 oder 2, bei dem die eine bzw. die mehreren Quellen für SiO₂ eine oder mehrere Verbindungen aus der Gruppe bestehend aus pyrogen hergestelltem Siliciumdioxid, Siliciumdioxid-Hydrosolen, reaktiven amorphen festen Siliciumdioxiden, Kieselgel, Kieselsäure, Wasserglas, Natriumetasilicathydrat, Sesquisilicat, Disilicat, kolloidalem Siliciumdioxid, Kieselsäureestern und Mischungen von zwei oder mehr davon umfasst bzw. umfassen.

4. Verfahren nach einem der Ansprüche 1 bis 3, bei dem die eine bzw. die mehreren Quellen für Al₂O₃ eine oder mehrere Verbindungen aus der Gruppe bestehend aus Aluminiumoxid, Aluminaten, Aluminiumsalzen und Mischungen von zwei oder mehr davon umfasst bzw. umfassen.

5. Verfahren nach einem der Ansprüche 1 bis 4, bei dem das SiO₂:Al₂O₃-Molverhältnis der Mischung gemäß Schritt (1) im Bereich von 0,5 bis 500 liegt.

6. Verfahren nach einem der Ansprüche 1 bis 5, bei dem die Mischung gemäß Schritt (1) ferner ein oder mehrere Lösungsmittel umfasst.

7. Verfahren nach einem der Ansprüche 1 bis 6, bei dem das H₂O: SiO₂-Molverhältnis der Mischung gemäß Schritt (1) im Bereich von 3 bis 50 liegt.

8. Verfahren nach einem der Ansprüche 1 bis 7, bei dem das Molverhältnis der einen bzw. der mehreren N,N,N-Trimethylcyclohexylammoniumverbundungen:SiO₂ in der gemäß Schritt (1) bereitgestellten Mischung im Bereich von 0,05 bis 3 liegt.

9. Verfahren nach einem der Ansprüche 1 bis 8, bei dem die in Schritt (1) bereitgestellte Mischung 3 Gew.-% oder weniger eines oder mehrerer Metalle M, bezogen auf 100 Gew.-% SiO₂, enthält, wobei M für Natrium oder Kalium steht.

10. Verfahren nach einem der Ansprüche 1 bis 9, bei dem die Mischung gemäß Schritt (1) ferner eine oder mehrere Quellen eines oder mehrerer Elemente, das bzw. die für die isomorphe Substitution mindestens eines Teils der Si-Atome und/oder der Al-Atome in der Gerüststruktur vom CHA-Typ geeignet ist bzw. sind, umfasst.

11. Verfahren nach einem der Ansprüche 1 bis 10, bei dem das Molverhältnis von SiO₂ zu dem einen bzw. den mehreren Elementen, das bzw. die für die isomorphe Substitution geeignet sind, im Bereich von 5 bis 200 liegt.

12. Verfahren nach einem der Ansprüche 1 bis 11, bei dem man bei der Kristallisation in Schritt (2) die Mischung erhitzt.

13. Verfahren nach einem der Ansprüche 1 bis 12, bei dem die Kristallisation in Schritt (2) unter solvothermalen Bedingungen durchgeführt wird.

14. Verfahren nach einem der Ansprüche 1 bis 13, bei dem man bei der Kristallisation in Schritt (2) die Mischung über einen Zeitraum im Bereich von 0,5 bis 50 d erhitzt.

15. Verfahren nach einem der Ansprüche 1 bis 14, bei dem man bei der Kristallisation in Schritt (2) die Mischung bewegt.

16. Verfahren nach einem der Ansprüche 1 bis 15, bei dem man ferner:
(3) das zeolithische Material isoliert
und/oder
(4) das zeolithische Material wäscht
und/oder
(5) das zeolithische Material trocknet
und/oder
(6) das zeolithische Material einem Ionenaustauschprozess unterwirft,
wobei die Schritte (3) und/oder (4) und/oder (5) und/oder (6) in beliebiger Reihenfolge durchgeführt werden können.

17. Verfahren nach Anspruch 16, bei dem man in dem mindestens einen Schritt (6) ein oder mehrere in dem Zeolithgerüst enthaltene ionische Nichtgerüstelemente ionenaustauscht.

18. Verfahren nach Anspruch 17, bei dem die Menge an Impfkristallen in der Mischung gemäß Schritt (1) im Bereich von 0,1 bis 20 Gew.-%, bezogen auf 100 Gew.-% in der mindestens einen Quelle für SiO₂ enthaltenes SiO₂, liegt.

19. Verfahren nach einem der Ansprüche 1 bis 18, bei dem die in Schritt (1) bereitgestellte Mischung, 0,1 Gew.-% oder weniger einer Trimethylzenzylammonium enthaltenden Verbindung umfasst.

20. Synthetisches zeolithisches Material mit einer Gerüststruktur vom CHA-Typ, die YO₂ und X₂O₃umfasst, wobei Y für Si steht und X für Al steht,
wobei das Material ein Röntgenbeugungsmuster mit mindestens den folgenden Reflexen umfasst:
| Beugungswinkel 2θ/° [Cu K(alpha 1)] | Intensität (%) |
|---|---|
| 9,44-9,88 | 29-92 |
| 16,03-16,55 | 32-79 |
| 17,81-18,13 | 12-42 |
| 20,62-21,30 | 100 |
| 25,02-25,42 | 25-70 |
| 30,83-31,43 | 39-73 |
wobei sich die Angabe 100 % auf die Intensität des höchsten Peaks im Röntgenpulverbeugungsmuster bezieht, und
wobei das IR-Spektrum des zeolithischen Materials Folgendes umfasst:
eine erste Absorptionsbande (B'1) im Bereich von 3550 bis 3660 cm⁻¹;
eine zweite Absorptionsbande (B'2) im Bereich von 3450 bis 3545 cm⁻¹;
eine dritte Absorptionsbande (B'3) im Bereich von 1800 bis 1930 cm⁻¹;
wobei das Verhältnis der maximalen Extinktion der ersten Absorptionsbande zur dritten Absorptionsbande B'1:B'3 im Bereich von 0,30 bis 2,5 liegt und
wobei das Verhältnis der maximalen Extinktion der zweiten Absorptionsbande zur dritten Absorptionsbande B'2:B'3 im Bereich von 0,1 bis 3,0 liegt.

21. Zeolithisches Material nach Anspruch 20, wobei das ²⁷Al-MAS-NMR des wie bei der Synthese anfallenden unbehandelten zeolithischen Materials Folgendes umfasst:
einen ersten Peak (P1) im Bereich von 52,3 bis 58,6 ppm und
einen zweiten Peak (P2) im Bereich von -2,3 bis -4,1 ppm; wobei die Integration des ersten und zweiten Peaks im ²⁷Al-MAS-NMR des zeolithischen Materials ein Verhältnis der Integrationswerte P1:P2 im Bereich von 1:(0-0,22) liefert.

22. Zeolithisches Material nach Anspruch 20 oder 21, wobei das Gerüst vom CHA-Typ 5 Gew.-% oder weniger P und/oder As, bezogen auf 100 Gew.-% in der Gerüststruktur enthaltenes YO₂, enthält.

23. Zeolithisches Material nach einem der Ansprüche 20 bis 22, wobei das SiO₂:Al₂O₃-Molverhältnis im Bereich von 2 bis 200 liegt.

24. Zeolithisches Material nach einem der Ansprüche 20 bis 23, wobei das zeolithische Material einen oder mehrere Zeolithe aus der Gruppe bestehend aus (Ni(deta)₂)-UT-6, Chabazit, |Li-Na| [Al-Si-O]-CHA, DAF-5, Dehyd. Na-Chabazit, K-Chabazit, LZ-218, Linde D, Linde R, Phi, SSZ-62, UiO-21, Willhendersonit, ZK-14, ZYT-6 und Kombinationen von zwei oder mehr davon umfasst.

25. Zeolithisches Material nach einem der Ansprüche 20 bis 24, wobei die gemäß DIN 66135 bestimmte BET-Oberfläche des zeolithischen Materials im Bereich von 100 bis 850 m²/g liegt.

26. Verwendung eines synthetischen zeolithischen Materials mit einer Gerüststruktur vom CHA-Typ nach Anspruch 20 bis 25 als Molsieb, als Adsorptionsmittel, zum Ionenaustausch, als Katalysator und/oder als Katalysatorträger.

## Revendications

1. Procédé de préparation d'un matériau zéolitique ayant une structure de type CHA comprenant YO₂ et X₂O₃, ledit procédé comprenant les étapes qui consistent à :
(1) fournir un mélange comprenant une ou plusieurs sources de YO₂, une ou plusieurs sources de X₂O₃, et un ou plusieurs composés de N,N,N-triméthyl-cyclohexylammonium comme agent structurant ;
(2) faire cristalliser le mélange obtenu à l'étape (1) pour obtenir un matériau zéolitique ayant une structure de type CHA ;
dans lequel Y est Si et X est Al,
dans lequel le mélange fourni à l'étape (1) comprend des germes cristallins, dans lequel les germes cristallins comprennent un ou plusieurs matériaux zéolitiques ayant une structure de type CHA, et
dans lequel le mélange fourni à l'étape (1) contient 5 % en poids ou moins de P₂O₅ présent dans une source de P₂O₅ relativement à 100 % en poids de SiO₂ présent dans les une ou plusieurs sources de SiO₂.

2. Procédé selon la revendication 1, dans lequel les un ou plusieurs composés de N,N,N-triméthyl-cyclohexylammonium sont des sels.

3. Procédé selon la revendication 1 ou 2, dans lequel les une ou plusieurs sources de SiO₂ comprennent un ou plusieurs composés sélectionnés dans le groupe constitué d'une silice pyrogénée, d'hydrosols de silice, de silices solides amorphes réactives, d'un gel de silice, de l'acide silicique, d'un verre soluble, du métasilicate de sodium hydraté, d'un sesquisilicate, d'un disilicate, d'une silice colloïdale, d'esters de l'acide silicique, et de mélanges de deux ou plusieurs de ceux-ci.

4. Procédé selon l'une quelconque des revendications 1 à 3, dans lequel les une ou plusieurs sources d'Al₂O₃ comprennent un ou plusieurs composés sélectionnés dans le groupe constitué d'une alumine, d'aluminates, de sels d'aluminium, et de mélanges de deux ou plusieurs de ceux-ci.

5. Procédé selon l'une quelconque des revendications 1 à 4, dans lequel le rapport molaire SiO₂:Al₂O₃ du mélange selon l'étape (1) est de 0,5 à 500.

6. Procédé selon l'une quelconque des revendications 1 à 5, dans lequel le mélange selon l'étape (1) comprend en outre un ou plusieurs solvants.

7. Procédé selon l'une quelconque des revendications 1 à 6, dans lequel le rapport molaire H₂O:SiO₂ du mélange selon l'étape (1) est de 3 à 50.

8. Procédé selon l'une quelconque des revendications 1 à 7, dans lequel le rapport molaire des un ou plusieurs cations N,N,N-triméthyl-cyclohexylammonium au SiO₂ dans le mélange fourni selon l'étape (1) est de 0,05 à 3.

9. Procédé selon l'une quelconque des revendications 1 à 8, dans lequel le mélange fourni à l'étape (1) contient 3 % en poids ou moins d'un ou plusieurs métaux M relativement à 100 % en poids de SiO₂, M représentant le sodium ou le potassium.

10. Procédé selon l'une quelconque des revendications 1 à 9, dans lequel le mélange selon l'étape (1) comprend en outre une ou plusieurs sources d'un ou plusieurs éléments convenant pour une substitution isomorphe d'au moins une partie des atomes de Si et/ou des atomes d'Al dans la structure de type CHA.

11. Procédé selon l'une quelconque des revendications 1 à 10, dans lequel le rapport molaire du SiO₂ aux un ou plusieurs éléments convenant pour une substitution isomorphe est de 5 à 200.

12. Procédé selon l'une quelconque des revendications 1 à 11, dans lequel la cristallisation à l'étape (2) comprend un chauffage du mélange.

13. Procédé selon l'une quelconque des revendications 1 à 12, dans lequel la cristallisation à l'étape (2) est réalisée dans des conditions solvothermiques.

14. Procédé selon l'une quelconque des revendications 1 à 13, dans lequel la cristallisation à l'étape (2) comprend un chauffage du mélange pendant une période allant de 0,5 à 50 j.

15. Procédé selon l'une quelconque des revendications 1 à 14, dans lequel la cristallisation à l'étape (2) comprend une agitation du mélange.

16. Procédé selon l'une quelconque des revendications 1 à 15, comprenant en outre une ou plusieurs des étapes suivantes consistant à :
(3) isoler le matériau zéolitique,
et/ou
(4) laver le matériau zéolitique,
et/ou
(5) sécher le matériau zéolitique,
et/ou
(6) soumettre le matériau zéolitique à une procédure d'échange d'ions,
dans lequel les étapes (3) et/ou (4) et/ou (5) et/ou (6) peuvent être réalisées dans n'importe quel ordre.

17. Procédé selon la revendication 16, dans lequel dans la au moins une étape (6), un ou plusieurs éléments non structuraux ioniques présents dans la structure de zéolite ont subi un échange d'ions.

18. Procédé selon la revendication 17, dans lequel la quantité de germes cristallins dans le mélange selon l'étape (1) est de 0,1 à 20 % en poids relativement à 100 % en poids de SiO₂ dans la au moins une source de SiO₂.

19. Procédé selon l'une quelconque des revendications 1 à 18, dans lequel le mélange fourni à l'étape (1) contient 0,1 % en poids ou moins d'un composé contenant du triméthylbenzylammonium.

20. Matériau zéolitique synthétique ayant une structure de type CHA comprenant YO₂ et X₂O₃,
dans lequel Y est Si et X est Al,
ledit matériau ayant un diagramme de diffraction des rayons X comprenant au moins les réflexions suivantes :
| Angle de diffraction 2θ/° [Cu K(alpha 1)] | Intensité (%) |
|---|---|
| 9,44-9,88 | 29-92 |
| 16,03-16,55 | 32-79 |
| 17,81-18,13 | 12-42 |
| 20,62-21,30 | 100 |
| 25,02-25,42 | 25-70 |
| 30,83-31,43 | 39-73 |
dans lequel 100 % correspond à l'intensité du pic maximal dans le diagramme de diffraction sur poudre des rayons X, et
dans lequel le spectre IR du matériau zéolitique comprend :
une première bande d'absorption (B'1) dans la plage de 3 550 à 3 660 cm⁻¹ ;
une deuxième bande d'absorption (B'2) dans la plage de 3 450 à 3 545 cm⁻¹ ;
une troisième bande d'absorption (B'3) dans la plage de 1 800 à 1 930 cm⁻¹ ;
dans lequel le rapport de l'absorbance maximale de la première bande d'absorption à la troisième bande d'absorption B'1:B'3 est compris dans la plage de 0,30 à 2,5 ; et
dans lequel le rapport de l'absorbance maximale de la deuxième bande d'absorption à la troisième bande d'absorption B'2:B'3 est compris dans la plage de 0,1 à 3,0.

21. Matériau zéolitique selon la revendication 20, dans lequel la RMN MAS ²⁷Al du matériau zéolitique non traité sous sa forme synthétisée comprend :
un premier pic (P1) dans la plage de 52,3 à 58,6 ppm ; et
un deuxième pic (P2) dans la plage de -2,3 à -4,1 ppm ; dans lequel l'intégration des premier et deuxième pics dans la RMN MAS ²⁷Al du matériau zéolitique présente un rapport des valeurs d'intégration P1:P2 compris dans la plage de 1: (0-0,22).

22. Matériau zéolitique selon la revendication 20 ou 21, dans lequel la structure de type CHA contient 5 % en poids ou moins de P et/ou d'As relativement à 100 % en poids du YO₂ présent dans la structure.

23. Matériau zéolitique selon l'une quelconque des revendications 20 à 22, dans lequel le rapport molaire SiO₂:Al₂O₃ est de 2 à 200.

24. Matériau zéolitique selon l'une quelconque des revendications 20 à 23, le matériau zéolitique comprenant une ou plusieurs zéolites sélectionnées dans le groupe constitué de la (Ni(deta)₂)-UT-6, de la chabasite, de la |Li-Na| [Al-Si-O]-CHA, de la DAF-5, de la Na-chabasite déshydratée, de la K-chabasite, de la LZ-218, de la Linde D, de la Linde R, de la Phi, de la SSZ-62, de la UiO-21, de la willhendersonite, de la ZK-14, de la ZYT-6, et de combinaisons de deux ou plusieurs de celles-ci.

25. Matériau zéolitique selon l'une quelconque des revendications 20 à 24, dans lequel la surface spécifique BET du matériau zéolitique déterminée selon DIN 66135 est de 100 à 850 m²/g.

26. Utilisation d'un matériau zéolitique synthétique ayant une structure de type CHA selon les revendications 20 à 25 comme tamis moléculaire, comme adsorbant, pour l'échange d'ions, comme catalyseur, et/ou comme support de catalyseur.
